(19) Europäisches Patentamt
European Patent Office
Office européen des brevets

(11) **EP 4 296 322 B1**

(12) **EUROPEAN PATENT SPECIFICATION**

(45) Date of publication and mention of the grant of the patent:
**05.03.2025 Bulletin 2025/10**

(21) Application number: **21937010.3**

(22) Date of filing: **16.04.2021**

(51) International Patent Classification (IPC):
***C09D 11/54** (2014.01)* ***B41J 2/01** (2006.01)*
***B41M 5/00** (2006.01)* ***C09D 11/322** (2014.01)*
***C09D 11/38** (2014.01)* ***C09D 11/107** (2014.01)*
***C09D 11/40** (2014.01)* ***C09D 11/037** (2014.01)*

(52) Cooperative Patent Classification (CPC):
**C09D 11/54; B41M 5/0017; C09D 11/037; C09D 11/107; C09D 11/322; C09D 11/38; C09D 11/40**

(86) International application number:
**PCT/JP2021/015750**

(87) International publication number:
**WO 2022/219816 (20.10.2022 Gazette 2022/42)**

(54) **INK SET AND INK-JET RECORDING METHOD**

TINTENSATZ UND TINTENSTRAHLAUFZEICHNUNGSVERFAHREN

ENSEMBLE D'ENCRES ET PROCÉDÉ D'IMPRESSION À JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.12.2023 Bulletin 2023/52**

(73) Proprietor: **KONICA MINOLTA, INC.**
**Tokyo 100-7015 (JP)**

(72) Inventors:
- **MAEDA, Akio**
**Tokyo 100-7015 (JP)**
- **HAMAGAMI, Hiroki**
**Tokyo 100-7015 (JP)**
- **KANEKO, Manabu**
**Tokyo 100-7015 (JP)**
- **NIIZUMA, Naoto**
**Tokyo 100-7015 (JP)**

(74) Representative: **Gille Hrabal Partnerschaftsgesellschaft mbB**
**Patentanwälte**
**Brucknerstraße 20**
**40593 Düsseldorf (DE)**

(56) References cited:
**EP-A1- 3 540 021**
**EP-A1- 3 733 425**
**JP-A- 2010 120 330**
**JP-A- 2011 252 029**
**JP-A- 2018 122 589**
**JP-A- 2019 163 442**
**JP-A- 2020 015 290**
**JP-A- 2020 019 183**
**JP-A- 2020 164 571**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 296 322 B1

## Description

### Technical Field

The present invention relates to an ink set and an inkjet recording method, and more particularly, to an ink set and the like which suppress image defects, has high image quality, and is excellent in adhesion to a base material.

### Background Art

Since an inkjet recording method can easily and inexpensively produce an image, it has been applied to various printing fields including photograph, various kinds of printing, and special printing such as marking and a color filter. In particular, since the inkjet recording method enables digital printing without using a plate, it is particularly suitable for applications where various images are formed in small quantities.

In such an inkjet recording method, a two-liquid type inkjet recording method is known in which a treatment liquid (also referred to as a "pretreatment liquid" or a "primer") containing a flocculant such as an organic acid or a polyvalent metal salt is applied to a base material in advance, whereby pigments contained in the ink are aggregated to pinning by an organic acid or a polyvalent metal salt in a subsequent step, thereby obtaining a high-quality image recorded matter.

In the two-liquid type inkjet recording method, it is possible to prevent bleeding of the ink and the like, while there is a problem that the glossiness of the image deteriorates due to excessive aggregation of the ink unless the time between the adhesion of the treatment liquid and the ink is appropriately controlled. For this reason, there has been disclosed a technique for improving printing stability on a non-absorbent base material and recording productivity by defining the amount of adhesion of the treatment liquid and shortening the time between the adhesion of the treatment liquid and the ink (see, for example, Patent Document 1).

Document JP 2018122589 A discloses a pretreatment liquid for printing an aqueous pigment inkjet ink, wherein the pretreatment liquid contains polyolefin resin particles (A), a coagulant (B), and water, and the softening temperature of the polyolefin resin particles (A) is 50 to 100 °C, and the aggregating agent (B) contains at least one member selected from the group consisting of a metal salt and a cationic polymer compound. The ink set comprising a pretreatment liquid and an aqueous ink containing a pigment, a pigment dispersion resin, a water-soluble organic solvent, and water, wherein the acid value of the pigment dispersion resin is in the range of 30 to 375 mg KOH/g.

However, in addition, if the static surface tension and the dynamic surface tension of the treatment liquid and the ink are not appropriately controlled, image defects such as bleeding, beading, and mottling of the outlined characters and thin lines occur depending on the combination of the treatment liquid and the ink, and it is difficult to achieve high image quality.

### Citation List

#### Patent Literature

Patent Document 1: JP 2016-221943 A

### Summary of the Invention

#### Problem to be solved by the Invention

The present invention has been made in view of the above-described problems and circumstances, and an object of the present invention is to provide an ink set and an inkjet recording set which suppress image defects, has high image quality, and is excellent in adhesion to a base material.

#### Means for solving the Problem

In order to solve the above problems, the present inventors have found that, in the process of studying the causes and the like of the above problems, by controlling the static surface tension and the dynamic surface tension of the treatment liquid and the ink to a specific range, an ink set and an inkjet recording method capable of achieving high image quality can be provided, and reached the present invention.

That is, the above problems according to the present invention are solved by by apended claims

According to the above means of the present invention, it is possible to provide an ink set and an inkjet recording set which suppress image defects and is excellent in adhesion to a base material.

The expression mechanism or action mechanism of the effects of the present invention has not been clarified, but

it is presumed as follows.

In the wet-on-wet recording method in which the ink is applied while the treatment liquid is wet, the treatment liquid needs to be reduced, but since the treatment liquid needs to be instantaneously wetted and spread to become uniform while the printing ratio is lowered, the dynamic surface tension of the treatment liquid should be lower, whereas if the dynamic surface tension of the ink is too low, outlined characters will be collapsed, so that it is better not to be too low.

Therefore, in the present invention, first, as a configuration capable of recording an image while securing base material adhesion, the ink contains a pigment, resin fine particles, a water-soluble solvent having a boiling point within the range of 150 to 250°C, and a surfactant, and further, the treatment liquid contains a polyvalent metal salt, a water-soluble solvent having a boiling point of 150 to 250°C, and surfactant in order to thicken and aggregate the ink to achieve high image quality.

Furthermore, the relationship between the static surface tension and the dynamic surface tension of the treatment liquid and the ink was defined in the above range. That is, when the static surface tension and the dynamic surface tension of the treatment liquid are lower than the static surface tension and the dynamic surface tension of the ink, respectively, the ink is aggregated and thickened while being appropriately diffused into the treatment liquid, so that it is possible to suppress image defects such as beading and mottling while preventing bleeding of outlined characters and thin lines, and as a result, it is possible to achieve high image quality.

Further, when the dynamic surface tension of the treatment liquid and the dynamic surface tension of the ink are set to be within the above ranges, high injection stability and storage stability can be obtained while ensuring high wettability to base material.

## Brief Description of the Drawings

[FIG. 1] This is a schematic diagram showing an example of a preferred recording apparatus in the present invention.

[Fig. 2] This is a cross-sectional view showing a schematic configuration of an image recorded matter according to the present invention.

[Fig. 3] This is a cross-sectional view of a packaging material for canned foods.

[Fig. 4] This is a schematic diagram of an inkjet head used in Example.

[Fig. 5] This is a diagram showing the dynamical surface tension of the ink set 1 in Example.

[Fig. 6] This is a diagram showing the dynamical surface tension of the ink set 44 in Example.

## Mode for Carrying out the Invention

The ink set of the present invention includes an ink and a treatment liquid, wherein the ink contains a pigment, resin fine particles, a water-soluble solvent having a boiling point within the range of 150 to 250°C, and a surfactant, the treatment liquid contains a polyvalent metal salt, a water-soluble solvent having a boiling point within the range of 150 to 250°C, and a surfactant, a static surface tension of the ink at 25°C is 5mN/m or higher than that of the treatment liquid, a dynamic surface tension in a surface life of 15ms of the ink is 5mN/m or higher than that of the treatment liquid in the surface life of 15ms, and a dynamic surface tension in the surface life of 15ms of the ink is in the range of 35 to 45mN/m, and a dynamic surface tension in the surface life of 15ms of the treatment liquid is in the range of 25 to 35mN/m.

This feature is the technical feature common to or corresponding to the following embodiments.

In an embodiment of the present invention, it is preferable that the pigment is dispersed with an anionic polymer dispersant from the viewpoint of excellent dispersibility and appropriately reacting with a treatment liquid to pinning.

It is preferable that the ink contains the range of 3 to 15% by mass of the resin fine particles having an aggregation property of 0.2 or less with 0.15% by mass of a calcium acetate monohydrate aqueous solution, from the viewpoint of obtaining high injection stability while ensuring high wettability to a base material, and having higher image quality and excellent adhesion to a base material, by using the resin fine particles having a low aggregation property.

It is preferable that the resin fine particles contain a water-dispersible polyester resin having a sulfonic acid group from the viewpoint of obtaining excellent adhesion to a base material.

Further, in the case that a dynamic surface tension in the surface life of 15ms of the treatment liquid in an undried state at 25°C is defined as A, and a dynamic surface tension in the surface life of 15ms of the treatment liquid when the drying ratio of the treatment liquid is 30% is defined as B, it is preferable to satisfy the following equation (I).

$$\text{Equation (I): } (B-A) \leqq 5\text{mN/m}$$

In the wet-on-wet recording method, since the dynamic surface tension does not change even if the treatment liquid is dried to some extent, the robustness against the temperature and humidity conditions at the time of recording can be improved.

It is preferable that a surfactant not contained in the ink is contained in the treatment liquid. By adding the surfactant which destabilizes the dispersion stability of the ink to the treatment liquid in this manner, the aggregation property can be further improved.

The inkjet recording method according to the present invention is an inkjet recording method for recording an image using the ink set, wherein the treatment liquid is applied to a base material, and then the ink is applied to a region to which the treatment liquid is applied while the treatment liquid is wet without undergoing a heat-drying step. By using the wet-on-wet recording method as described above, it is possible to obtain high injection stability while ensuring high wettability to a base material by mixing the ink and the treatment liquid, and to have high image quality and excellent adhesion.

In particular, it is preferable to apply the ink in a state in which the drying rate of the treatment liquid is 30% or less to the region to which the treatment liquid is applied, in that the ink and the treatment liquid are appropriately mixed and the effect of the present invention can be more remarkably exhibited.

After the treatment liquid is applied to the base material, it is preferable to apply the ink to the region to which the treatment liquid was applied within 10 seconds in order to suppress penetration of the treatment liquid into the absorbent base material and repelling of the treatment liquid in the non-absorbent base material in order to achieve higher image quality.

It is preferable that the applied amount of the ink per unit area is within the range of 2 to 25 times the applied amount of the treatment liquid in order to achieve higher image quality.

Hereinafter, the present invention, its constituent elements, and embodiments and aspects for carrying out the present invention will be described. In the present application, "to" is used in the meaning that numerical values described before and after are included as a lower limit value and an upper limit value.

[Summary of Ink set of the present invention]

The ink set of the present invention is an ink set including an ink and a treatment liquid, wherein the ink contains a pigment, resin fine particles, a water-soluble solvent having a boiling point within the range of 150 to 250°C, and a surfactant, and the treatment liquid contains a polyvalent metal salt, a water-soluble solvent having a boiling point within the range of 150 to 250°C, and a surfactant. Further, a static surface tension of the ink at 25°C is 5mN/m or higher than a static surface tension of the treatment liquid, and a dynamic surface tension in the surface life of 15ms of the ink at 25°C is 5mN/m or higher than a dynamic surface tension in the surface life of 15ms of the treatment liquid, a dynamic surface tension in the surface life of 15ms of the ink is 35mN/m or more and 45mN/m or less, and a dynamic surface tension in the surface life of 15ms of the treatment liquid is 25mN/m or more and 35mN/m or less.

As used herein, the terms "treatment liquid" and "ink" refer to "treatment liquid (also referred to as "pretreatment liquid" or "primer") and "ink (also referred to as "water-based ink" or "water base ink")" using at least "water" as solvent. In both cases, 60% by mass or more of solvent used is "water".

<Static surface tension>

In the present invention, the "static surface tension" refers to a surface tension when the liquid surface is brought into an equilibrium state by diffusion of each component in the ink or the treatment liquid as the surface life elapses.

The measuring method of the static surface tension of the ink or the treatment liquid can be measured by using Automatic surface tensiometer (model "CBVP-Z" manufactured by Kyowa Interface Science Co., Ltd.) using a platinum plate. Unless otherwise noted, the static surface tension herein is a static surface tension measured at 25°C.

In the ink set of the present invention, the static surface tension of the ink at 25°C is 5mN/m or higher than the static surface tension of the treatment liquid. A higher value in the range of 6 to 12mN/m is preferable.

Specifically, the static surface tension of the ink at 25°C is preferably in the range of 25 to 35mN/m, and the static surface tension of the treatment liquid is preferably in the range of 20 to 30mN/m.

When a plurality of types of inks are used, the difference between the ink having the lowest static surface tension and the static surface tension of the treatment liquid may be within the above range.

<Dynamic surface tension>

In the present invention, the "dynamic surface tension" refers to a surface tension immediately after a liquid

surface (gas-liquid interface) is formed and when the liquid surface is in a non-equilibrium state, and is a value measured at 25°C by a maximum bubble pressure method.

Further, the "surface life" refers to the elapsed time since the liquid surface is formed, that is, the life of bubbles generated in the maximum bubble pressure method, also referred to as bubble lifetime, and refers to the time from the time when a new interface is generated in the probe tip of the dynamic surface tensiometer to the time when the maximum bubble pressure is obtained.

The measuring method of the dynamic surface tension of the treatment liquid or the ink can be measured by using a dynamic surface tensiometer. Examples of the dynamic surface tensiometer include a bubble pressure dynamic surface tensiometer (manufactured by KRUSS Scientific, model "BP100"), and the like.

Unless otherwise noted, the dynamic surface tension herein is a dynamic surface tension measured at 25°C and 15ms using the maximum bubble pressure method.

In the ink set of the present invention, the dynamic surface tension (also referred to as "dynamic surface tension A") in the surface life of 15ms of the ink at 25°C is 5mN/m or higher than the dynamic surface tension in the surface life of 15ms of the treatment liquid. A higher value in the range of 7 to 15mN/m is preferable.

When a plurality of types of inks are used, the difference between the ink having the lowest dynamic surface tension and the dynamic surface tension of the treatment liquid may be within the above range.

In addition, the dynamic surface tension in the surface life of 15ms of the treatment liquid is within the range of 25 to 35mN/m, and preferably within the range of 27 to 33mN/m.

Furthermore, the dynamic surface tension in the surface life of 15ms of the ink is within the range of 35 to 45mN/m, and preferably within the range of 37 to 43mN/m.

In order to make the static surface tension and the dynamic surface tension of the treatment liquid within the above ranges, the type and the content of the surfactant, the type and the content of the water-soluble solvent, the type and the content of the flocculant may be controlled.

Specifically, as the surfactant contained in the treatment liquid, various polyether-modified silicones and/or acetylene glycol-based surfactant are preferably used, and the content thereof is preferably in the range of 0.1 to 2.0% by mass. As the water-soluble solvent, a water-soluble solvent having a SP value of 24 $(J/cm^3)^{1/2}$ or more and a boiling point within the range of 150°C to 250°C) is preferably used, and the content thereof is preferably in the range of 5 to 40% by weight.

In order to make the static surface tension and the dynamic surface tension of the ink within the above ranges, the type and the content of the surfactant, the type and the content of the water-soluble solvent, the type and the content of the pigment dispersant, the type and the content of the resin fine particles, and the type and the content of the additive may be controlled.

Specifically, as the surfactant contained in the ink, various polyether-modified silicones and/or acetylene glycol-based surfactant are preferably used, and the content thereof is preferably in the range of 0.1 to 2.0% by mass. As the water-soluble solvent, a water-soluble solution having a SP value of 24 $(J/cm^3)^{1/2}$ or more and a boiling point within the range of 150°C to 250°C is preferably used, and the content thereof is preferably in the range of 5 to 40% by mass. As the pigment dispersant, it is preferable to use various low-molecular-weight dispersant, nonionic polymer dispersant, and anionic polymer dispersant are preferably used, or appropriately use resin-coated pigment dispersions. Further, as the type of the resin fine particles, it is preferable to use resin fine particles such as polyester resin, acrylic resin, styrene acrylic resin, and urethane resin, and the content thereof is preferably in the range of 3 to 15% by mass.

<Dynamic surface tension after 30% drying>

Further, in the case that a dynamic surface tension in the surface life of 15ms of the treatment liquid in an undried state at 25°C is defined as A, and a dynamic surface tension in the surface life of 15ms when the drying ratio of the treatment liquid is 30% is B, the ink set of the present invention preferably satisfies the following equation (I).

$$\text{Equation (I): } (B-A) \leqq 5\text{mN/m}$$

By satisfying the equation (I), in the wet-on-wet recording method, since the dynamic surface tension does not change even if the treatment liquid is dried to some extent, the robustness against the temperature and humidity conditions at the time of recording can be improved.

Here, the "dynamic surface tension A" is a dynamic surface tension of the treatment liquid before drying the treatment liquid as described below, that is, in the surface life of 15ms at 25°C of an undried (state), and is the value measured at 25°C by the maximum bubble pressure method described above.

In addition, the "dynamic surface tension B" is a dynamic surface tension in the surface life of 15ms of the treatment liquid when the treatment liquid is dried and the drying rate is 30%. Specifically, 100 grams of the treatment liquid

are weighed into a shallow container, and dried in a vacuum atmosphere at 25°C until the weight of the liquid is 70 grams, and the dynamic surface tension of the treatment liquid at this time is measured by the maximum bubble pressure method described above, and this is defined as the dynamic surface tension B after 30% drying.

The difference "(B-A)" is calculated from the dynamic surface tension B after 30% drying and the dynamic surface tension A measured in this way.

[Treatment liquid]

The treatment liquid according to the present invention can have functions of accelerating the image forming of the ink, improving the physical properties of the treatment liquid layer and the ink layer, and improving the image quality by aggregating or thickening the ink when an image is recorded on a base material by an inkjet printing method.

The treatment liquid according to the present invention contains at least a polyvalent metal salt, a water-soluble solvent having a boiling point wthin the range of 150 to 250°C, and a surfactant. The treatment liquid may contain water.

<Polyvalent metal salt>

The treatment liquid according to the present invention contains a material that produces an aggregate when it comes into contact with the ink, that is, a flocculant that is a polyvalent metal salt, so that the interaction with the ink is increased and the dots of the ink can be further fixed.

The polyvalent metal salt may aggregate an anionic component (usually a coloring material, a pigment, or the like) in an ink to be described later by salting-out.

As the polyvalent metal salt, a salt of a metal having a valence of 2 or more can be used. The type of the metal (cation) constituting the polyvalent metal salt is not particularly limited, and examples thereof include a divalent metal ion such as $Ca^{2+}$, $Cu^{2+}$, $Ni^{2+}$, $Mg^{2+}$, $Zn^{2+}$, and $Ba^{2+}$, a trivalent metal ion such as $Al^{3+}$, $Fe^{3+}$, $Cr^{3+}$, and $Y^{3+}$, and a tetravalent metal ion such as $Zr^{4+}$.

The type of the salt constituting the polyvalent metal salt is not particularly limited, and for example, known salts such as carbonate, sulfate, nitrate, hydrochloride, organic acid, borate, and phosphate can be used. Specific examples of particularly preferred polyvalent metal salts include calcium or magnesium salts of carboxylic acids such as calcium chloride, magnesium chloride, calcium nitrate, magnesium nitrate, magnesium acetate, calcium acetate, magnesium lactate, and calcium pantothenate.

<Organic acid>

The treatment liquid according to the present invention may further contain an organic acid as a flocculant in addition to the polyvalent metal salt. The organic acid can aggregate the anionic components in the ink due to a pH change. As the organic acid, a monovalent carboxylic acid is preferable from the viewpoint of not weakening the aggregation force of the polyvalent metal salt.

The organic acid can aggregate a pigment that can be contained in the ink described later.

Examples of the organic acid include formic acid, acetic acid, propionic acid, isobutyric acid, and benzoic acid.

The organic acid is preferably one which is not completely neutralized by a base. Neutralization with a base means that the acidic groups of these acids form ionic bond with other positively charged elements or compounds (e.g., inorganic compounds such as metals). In addition, the term "not completely neutralized" means that an acidic group that does not form the ionic bond among the acidic groups of the organic acid is present.

In addition, by using an organic acid, the storage stability of the treatment liquid is easily maintained, and blocking is unlikely to occur after the treatment liquid is applied and dried. Preferred organic acids in view of the above include formic acid, acetic acid, propionic acid, benzoic acid, and the like.

<Inorganic acid>

In the treatment liquid according to the present invention, in addition to the polyvalent metal salt, an inorganic acid may be further added as a flocculant. The inorganic acid can aggregate the anionic components in the ink due to a pH change.

The inorganic acid can aggregate a pigment that may be contained in an ink described later. Examples of the inorganic acid include hydrochloric acid, nitric acid, sulfuric acid, and sulfamic acid.

The content of the polyvalent metal salt is preferably in the range of 0.5 to 20 % by mass, and more preferably in the range of 1 to 10 % by mass, based on 100 % by mass of the total mass of the treatment liquid. As a result, anionic components in the ink can be effectively aggregated, which is preferable from the viewpoint of balancing the image quality and the hot water resistance.

When the organic acid is contained, the content of the organic acid is preferably in the range of 0.1 to 10% by mass, and more preferably in the range of 1 to 3% by mass, based on 100% by mass of the total mass of the treatment liquid.

When the inorganic acid is contained, the content of the inorganic acid is preferably in the range of 0.1 to 10 % by mass, and more preferably in the range of 1 to 3 % by mass, based on 100 % by mass of the total mass of the treatment liquid.

The content of the polyvalent metal salt or the organic acid in the aqueous solution can be measured by a known method. For example, the content can be measured by ICP emission spectrometry in the case of the polyvalent metal salt and by high performance liquid chromatography (HPLC) in the case of the organic acid.

When an organic acid is used, the applied amount of the organic acid is preferably an amount that adjusts pH of the treatment liquid to be equal to or less than the neutralization equivalent amount of the anionic components contained in the ink. In addition, when the anion component is a compound having a carboxy group, the first dissociation constant of the organic acid is preferably 3.5 or less from the viewpoint of making bleeding of the image less likely to occur.

<Water-soluble solvent>

The water-soluble solvent contained in the treatment liquid according to the present invention is a water-soluble solvent having a boiling point within the range of 150 to 250°C.

Examples of the water-soluble solvent include alcohols, polyhydric alcohols, amines, amides, glycol ethers, and 1,2-alkanediols having 4 or more carbon atoms.

Further, it is preferable to use a water-soluble solvent having a SP value of 24 $(J/cm^3)^{1/2}$ or more.

The use of a water-soluble solvent having a SP value of 24 $(J/cm^3)^{1/2}$ or more reduces the cloud point of the treatment liquid. Thus, it is possible to heat to the cloud point of the treatment liquid or higher in the ink drying step, and in particular, an image having good adhesion to the non-absorbent base material can be obtained.

In the present invention, the SP value is referred to as Solubility Parameter. The SP value in the present invention is a value calculated by Fedors method. It is determined from the heat of molar vaporization of the water-soluble solvent and the molar volume of the water-soluble solvent at 25°C. As the unit of the SP value, cal is generally used. However, when converting to the SI unit system, the relation of $(cal/cm^3)^{1/2}=2.046\times10^3(J/m^3)^{1/2}$ may be used. In the following description, the unit of the SP value may be omitted, but the SP value is a value expressed in units of $(J/cm^3)^{1/2}$.

Examples of the water-soluble solvent having the SP value of 24 $(J/cm^3)^{1/2}$ or more and a boiling point of 150°C to 250°C include polyhydric alcohols having 2 to 8 carbon atoms and polyalkylene glycols.

Examples of the polyhydric alcohols having 2 to 8 carbon atoms include 1,2-ethanediol (SP value: 30.3, boiling point: 197°C), 1,2-propanediol (SP value: 28.0, boiling point: 188°C), 1,3-propanediol (SP value: 32.9, boiling point: 213°C), 1,2-butanediol (SP value: 26.1, boiling point: 192°C), 1,3-butanediol (SP value: 30.3, boiling point: 207°C), 1,4-butanediol (SP value: 30.7, boiling point: 230°C), 2,3-butanediol (SP value: 29.9, boiling point: 177°C), 2-methyl-1,3-propanediol (SP value: 30.3, boiling point: 214°C), 1,2-pentanediol (SP value: 25.0, boiling point: 210°C), 1,5-pentanediol (SP value: 29.0, boiling point: 242°C), 1,2-hexanediol (SP value: 24.1, boiling point: 223°C), 1,6-hexanediol (SP value: 27.7, boiling point: 249°C), and 2-methylpentane-2,4-diol (SP value: 26.8, boiling point: 197°C).

Examples of the polyalkylene glycols include diethylene glycol (SP value: 30.6, boiling point: 244°C) and dipropylene glycol (SP value: 27.2, boiling point: 230°C).

The treatment liquid may contain one or two or more kinds selected from these water-soluble solvents.

At least one kind of the water-soluble solvent having a boiling point of 150°C to 250°C may be contained in the ink, and alcohols, polyhydric alcohols, amines, amides, glycol ethers, and 1,2-alkanediols having 4 or more carbon atoms other than the above may be contained.

Examples of the solvent other than the water-soluble solvent having a boiling point of 150°C to 250°C include glycerin (SP value: 33.5, boiling point: 290°C), trimethylolpropane (SP value: 32.5, boiling point: 295°C), triethylene glycol (SP value: 27.8, boiling point: 287°C), and tetraethylene glycol (SP value: 26.1, boiling point: 275°C).

The total content of the water-soluble solvent is preferably in the range of 5 to 40% by mass, and more preferably in the range of 10 to 40% by mass, based on 100% by mass of the total mass of the treatment liquid.

<Surfactant>

The surfactant contained in the treatment liquid according to the present invention can improve the ejection stability of the treatment liquid from nozzle and control the spread of droplets (expanding of the dot-diameter) landed on a recording medium.

The surfactant which can be used in the treatment liquid of the present invention can be used without any particular limitation, but when an anionic compound is contained in other constituents of the ink, the ionicity of the surfactant is preferably anionic, nonionic or betaine type.

In the present invention, fluorine-based or silicone-based surfactants having a high-static surface tension reducing ability, anionic surfactants such as dioctyl sulfosuccinate having a high-dynamic surface tension reducing ability, polyoxyethylene alkyl ethers and polyoxyethylene alkyl phenyl ethers having relatively low molecular weights, acetylene glycols, Pluronic (registered trademark) type surfactant, and nonionic surfactant such as sorbitan derivatives are preferably used. It is also preferable to use a fluorine-based or silicone-based surfactant in combination with a surfactant having a high-dynamic surface tension reducing ability.

It is preferable to add silicone-based or fluorine-based surfactants as a surfactant, in that mixing of inks (beading) can be further suppressed with respect to a recording medium made of various hydrophobic resins such as vinyl chloride sheets and a recording medium having a low ink absorbing ability such as printed paper and high-quality printed images can be preferably obtained.

The silicone-based surfactant is preferably a polyether-modified silicone, for example, a siloxane having an alkylene oxide group at the side chain and/or at both ends of the polydimethylsiloxane chain.

Specific examples thereof include BYK-331, BYK-333, BYK-345, BYK-3450, BYK-3451, BYK-3455, BYK-346, BYK-347, BYK-348, and BYK-349 manufactured by BYK-Chemie Co., Ltd., TEGOWetKL245, TEGOWet250, TEGOWet260, TEGOWet270, and TEGOWet280 manufactured by Evonik Japan Co., Ltd., and KF-351A, KF-352A, KF-353, KF-354L, KF-355A, KF-615A, KF-640, KF-642, KF-643, KF-644, KF-945, KF-6011, KF-6012, KF-6015, KF-6017, KF-6020, KF-6204, and X-22-4515 manufactured by Shin-Etsu Chemical Co., Ltd.

As the polyether-modified silicone, in particular, a trisiloxane having an alkylene oxide group at the side chains and/or at both ends of the polydimethylsiloxane chain is preferred. By using a trisiloxane, the dynamic surface tension of the treatment liquid can be effectively reduced, and an image with good adhesion to a base material can be obtained.

The trisiloxane preferably has a structure represented by the general formula (1) below.

[Chemical formula 1]

General formula (1)

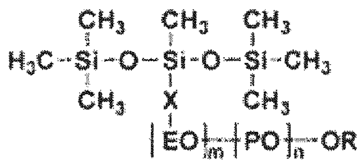

In the general formula (1), "EO" represents a repeating unit structure of polyethylene oxide, that is, a structure in which ethylene oxide, which is a three-membered cyclic ether, is ring-opened. In addition, "PO" represents a repeating unit structure of polypropylene oxide, that is, a structure in which propylene oxide, which is a three-membered cyclic ether, is ring-opened. Here, "[EO]m and [PO]n can be in any order" means that the order of the bonding positions to the siloxane skeleton serving as the parent compound in the compound molecule represented by the general formula (1) may be changed as appropriate.

In the general formula (1), X is preferably an alkylene group having 3 carbon atoms (i.e., a propylene group).

In the general formula (1), m is preferably an integer of 5 to 20, and n is preferably an integer of 0 to 6.

Specific examples of the silicone-based surfactant having the structure represented by the general formula (1) are shown below as S-1 to S-8, but the present invention is not limited thereto.

(S-1): In the general formula (1), R=methyl group, X=alkylene group having 3 carbon atoms, m=9, and n=0
(S-2): In the general formula (1), R=butyl group, X=alkylene group having 3 carbon atoms, m=25, and n=6
(S-3): In the general formula (1), R=hydrogen atom, X=an alkylene group having 3 carbon atoms, m=3, and n=0
(S-4): In the general formula (1), R=hydrogen atom, X=an alkylene group having 3 carbon atoms, m=33, and n=0
(S-5): In the general formula (1), R=hydrogen atom, X=an alkylene group having 3 carbon atoms, m=22, and n=16
(S-6): In the general formula (1), R=hydrogen atom, X=an alkylene group having 3 carbon atoms, m=9, and n=0
(S-7): In the general formula (1), R=hydrogen atom, X=an alkylene group having 3 carbon atoms, m=12, and n=3
(S-8): In the general formula (1), R=hydrogen atom, X=an alkylene group having 3 carbon atoms, m=1, and n=0

Examples of the trisiloxane include BYK-3450 and BYK-3451 manufactured by BYK-Chemie Japan Co., Ltd., and TEGOWET-KL245, TEGOWET-250, and TEGOWET-260 manufactured by Evonik Japan Co., Ltd.

The content of the polyether-modified silicone is preferably in the range of 0.5 to 2% by mass, and more preferably in the range of 0.5 to 1.5% by mass, based on 100% by mass of the total mass of the treatment liquid.

The fluorine-based surfactant means that the hydrogen bonded to the carbon of the hydrophobic group of an ordinary surfactant is partially or wholly replaced with fluorine. Among them, those having a perfluoroalkyl group in the molecule are preferable.

Some of the fluorine-based surfactant described above are commercially available from DIC Corporation under the trade name of Megafac F, from Asahi Glass Co., Ltd. under the trade name of Surflon, from Minnesota Mining and Manufacturing Company under the trade name of Fluorad FC, from Imperial Chemical Industries under the trade name of Monflor, from E.I. du Pont de Nemours & Company under the trade name of Zonyls, and from Farbwerke Hoechst under the trade name of Licowet VPF, respectively

In particular, the treatment liquid according to the present invention preferably contains a surfactant not contained in the ink described later in the treatment liquid, and the following two patterns are exemplified.

When a surfactant contained in the ink is a surfactant S1,

(i) The surfactant contained in the treatment liquid is preferably a surfactant S2 that differs from a surfactant S1 contained in the ink.

(ii) The surfactant contained in the treatment liquid preferably contains the surfactant S2 in addition to the surfactant S1.

As a specific preferred combination of surfactants, the surfactant contained in the treatment liquid is preferably a polyether-modified silicone or the like, and the surfactant contained in the ink is preferably an acetylene glycol-based surfactant or the like and a polyether-modified silicone or the like.

The surfactant not contained in the ink as described above (i.e., the surfactant that destabilizes the dispersion stability of the ink) can be added into the treatment liquid to further enhance the aggregation property.

The content of surfactant in the treatment liquid is not particularly limited, but is preferably within the range of 0.1 to 5.0 % by mass of the total mass of the treatment liquid.

<Water>

The treatment liquid according to the present invention may contain water, and the usable water is not particularly limited, and may be ion-exchanged water, distilled water, or pure water.

In the treatment liquid, other components such as a crosslinking agent, an antifungal agent, and a fungicide can be appropriately blended as long as the effect of the present invention is not impaired.

Further, for example, known various additives such as the ultraviolet absorber described in JP S57-74193A, JP S57-87988A, and JP S62-261476A, the color fading inhibitor described in JP S57-74192A, JP S57-87989A, JP S60-72785A, JP S61-146591A, JP H01-95091A, and JP H03-13376A, various surfactants such as anionic, cationic, or nonionic, the fluorescent brightening agent described in JP S59-42993A, JP S59-52689A, JP S62-280069A, JP S61-242871A, and JP H04-219266A, a defoamer, a lubricant such as diethylene glycol, a preservative, a thickener, and an antistatic agent and the like may be included.

It is preferable to prepare a treatment liquid layer by applying and drying the treatment liquid according to the present invention directly onto a base material as a coating liquid. Here, the additive preferably used in the treatment liquid is preferably sufficiently dissolved and then used as a coating liquid.

As a coating method of the treatment liquid, an inkjet method, a roll coating method, a rod bar coating method, an air knife coating method, a spray coating method, a curtain coating method, or an extrusion coating method using a hopper described in U.S. Pat. No. 2681294 is preferably used, and an inkjet method is particularly preferable.

[Ink]

The ink according to the present invention contains at least a pigment, resin fine particles, a water-soluble solvent having a boiling point within the range of 150 to 250°C, and a surfactant. It may also contain water.

[Pigment]

As the pigment used in the ink according to the present invention contained in the ink according to the present invention, it is preferable to use an anionic dispersed pigment, for example, a self-dispersible pigment having an anionic group on its surface, a pigment dispersed by an anionic polymer dispersant, or a pigment dispersed by coating a surface with an anionic resin. In particular, it is preferable to use a pigment dispersed by an anionic polymer dispersant from the viewpoint of excellent dispersibility and appropriately reacting with a treatment liquid to pinning.

As the pigment, conventionally known pigments can be used without any particular limitation, and for example, an insoluble pigment, an organic pigment such as a lake pigment, and an inorganic pigment such as titanium oxide can be preferably used.

In titanium oxide, which is generally difficult to ensure the ink ejection stability and adhesion, the present invention makes it particularly preferable to prevent bleeding and improve adhesion.

Titanium oxide has three crystal forms of anatase type, rutile type, and blue-kite type, and they are roughly classified into anatase type and rutile type for the general-purpose type. Although not particularly limited, a rutile type having a high refractive index and high concealability is preferable. Specific examples thereof include TR series of Fuji Titanium Industry Co., Ltd., JR series of Tayca Co., Ltd., and TIPAQUE of Ishihara Sangyo Kaisha, Ltd.

Although the insoluble pigment is not particularly limited, for example, azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, diketopyrrolopyrrole, and the like are preferable.

Specific examples of the organic pigment that can be preferably used include the following pigments.

Examples of the pigment for magenta or red include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53: 1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 202, C.I. Pigment Red 222, and C.I. Pigment Violet 19.

Examples of the pigment for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 74, C.I. Pigment Yellow 93, C.I. Pigment Yellow 128, C.I. Pigment Yellow 94, C.I. Pigment Yellow 138, and C.I. Pigment Yellow 155. C.I. Pigment Yellow 155 is particularly preferable in terms of the balance between color tone and light fastness.

Examples of the pigment for green or cyan include C.I. Pigment Blue 15, C.I. Pigment Blue 15:2, C.I. Pigment Blue 15:3, C.I. Pigment Blue 16, C.I. Pigment Blue 60, and C.I. Pigment Green 7.

Examples of the pigment for black include C.I. pigment black 1, C.I. pigment black 6, and C.I. pigment black 7.

<Pigment dispersant>

It is preferable that the ink according to the present invention contains a pigment dispersant for dispersing the pigment.

The pigment dispersant is preferably, but not limited to, a polymer dispersant having an anionic group, and preferably has a molecular weight within the range of 5000 to 200000.

Examples of the polymer dispersant include block copolymers having a structure derived from two or more kinds of monomers selected from styrene, styrene derivatives, vinyl naphthalene derivatives, acrylic acid, acrylic acid derivatives, maleic acid, maleic acid derivatives, itaconic acid, itaconic acid derivatives, fumaric acid, and fumaric acid derivatives, random copolymers and salts thereof, polyoxyalkylene, and polyoxyalkylene alkyl ethers.

The polymer dispersant preferably has an acryloyl group, and is preferably added by neutralizing with a neutralizing base. Here, the neutralizing base is not particularly limited, but is preferably an organic base such as ammonia, monoethanolamine, diethanolamine, triethanolamine, or morpholine. In particular, when the pigment is titanium oxide, the titanium oxide is preferably dispersed by a polymer dispersant having an acryloyl group.

The added amount of the polymer dispersant is preferably in the range of 10 to 100% by mass, and more preferably in the range of 10 to 40% by mass with respect to the pigment.

It is particularly preferable that the pigment has a form of so-called encapsulated pigment in which the pigment is coated with the above polymer dispersant. As the coating method of the pigment with a polymer dispersant, various known methods can be used, and for example, a phase inversion emulsification method, an acid precipitation method, or a method of dispersing the pigment with a polymerizable surfactant, supplying a monomer thereto, and coating the pigment while polymerizing, are preferably exemplified.

A particularly preferred method is a method of dissolving a water-insoluble resin in an organic solvent such as methyl ethyl ketone, partially or completely neutralizing an acid group in the resin with a base, adding a pigment and ion-exchanged water disperse, removing the organic solvent, and adding water as necessary to prepare.

The average particle size of the pigment dispersed in the ink is preferably 50nm or more and less than 200nm. As a result. the dispersion stability of the pigment can be improved. and the storage stability of the ink can be improved. The particle size of the pigment can be measured by a commercially available particle size measuring instrument using a dynamic light scattering method, an electrophoresis method, or the like, but the measurement by a dynamic light scattering method is easy, and the particle size area can be measured accurately.

The pigment can be used by being dispersed using a disperser together with a dispersant and other additives required depending on the desired purpose.

As the disperser, a conventionally known ball mill, a sand mill, a line mill, a high-pressure homogenizer, and the like can be used. Among them, it is preferable to disperse the pigment by a sand mill because the particle size distribution becomes sharp. The material of the beads used for the sand mill dispersion is not particularly limited, but is preferably zirconia or zircon from the viewpoint of preventing generation of bead fragments and contamination of ion components. Furthermore, the bead diameter is preferably in the range of 0.3 to 3mm.

The content of the pigment in the ink is not particularly limited, but the titanium oxide is preferably in the range of 7 to 18% by mass, and the organic pigment is preferably in the range of 0.5 to 7% by mass.

<Resin Fine Particles>

The resin fine particles (hereinafter, also simply referred to as "resin") contained in the ink according to the present invention are preferably water-insoluble resin fine particles.

The glass transition temperature (glass transition point (Tg)) of the resin fine particles is preferably in the range of 40 to 90°C. The glass transition temperature (glass transition point (Tg)) can be specified by reading the glass transition temperature Tg from an endothermic peak when the temperature is increased in a temperature range of -30 to 200°C at a temperature increase rate of 10°C/min using a DSC (differential scanning calorimeter).

The water-insoluble resin used in the present invention is a water-insoluble resin that can receive an ink and exhibits solubility or affinity for the ink.

The water-insoluble resin fine particles are water-insoluble in nature, but have a form in which a resin is dispersed in an aqueous medium as micro fine particles, and are non-water soluble resin which is forcibly emulsified by using an emulsifier or the like and dispersed in water, or non-water soluble resin which can be self-emulsified by introducing a hydrophilic functional group into a molecule to form a stable water dispersion by itself without using an emulsifier or a dispersion stabilizer. These resins are usually used in emulsified and dispersed form in water or water/alcohol mixed solvent.

In the present invention, the term "water-insoluble" refers to a resin having a dissolution amount of 10g or less, preferably 5g or less, more preferably 1g or less when the resin is dried at 105°C for 2 hours and then dissolved in 100g of water at 25°C. However, when the resin has a salt-forming group, the dissolution amount is the amount dissolved when the salt-forming group of the resin is neutralized by 100% with acetic acid or sodium hydroxide, depending on the type thereof.

The resin having the glass transition temperature within the range of 40 to 90°C is preferably any one of acrylic resin, urethane resin, polyester resin or a composite resin of urethane resin and acrylic resin, particularly acrylic resin, urethane resin, polyester resin or a composite resin of urethane resin and acrylic resin, and it is preferable that the average particle size of the resin particles of these resins is 200nm or less. In particular, the average particle size is preferably in the range of 100 to 150nm.

The polyester resin, the urethane resin, the acrylic resin, or the composite resin fine particles of the urethane resin and the acrylic resin described above are preferably anionic or nonionic.

Among them, the resin fine particles used in the ink preferably contain an acid structure, and can be dispersed in water even if the added amount of the surfactant is small, so that the water resistance of the ink layer is improved. This is called a self-emulsifying type, which means that the resin can be dispersed and stabilized in water only by molecular ionic properties without using a surfactant. Examples of the acid structure include an acid group such as a carboxy group (-COOH), a sulfonic acid group ($-SO_3H$), and the like. The acid structure may be present in a side chain or ends in the resin.

The ink according to the present invention particularly preferably contains a water-dispersible polyester resin having a sulfonic acid group. This results in a higher adhesion to a base material.

Some or all of the above acid structures are preferably neutralized. By neutralizing the acid structure, the water dispersibility of the resin can be improved. Example of the neutralizing agent for neutralizing the acid structure is preferably organic amines, and it is preferable to use organic amines such as trimethylamine, triethylamine, tripropylamine, tributylamine, N-methyldiethanolamine, triethanolamine, and the like.

The ink according to the present invention preferably contains the range of 3 to 15% by mass of resin fine particles having an aggregation property of 0.2 or less with 0.15% by mass of a calcium acetate aqueous solution. By using the resin fine particles having low aggregation property as described above, high ejection stability can be obtained while securing high wettability to the base material, and the image quality is higher and the adhesion to the base material is excellent.

In the present invention, the "aggregation property" is a value calculated by the following formula after the remaining amount is measured by the following procedure.

(i) Mix 5g of a resin fine particle aqueous solution (solid content: 10% by mass) containing resin fine particles and 5g of 0.3% by mass of calcium acetate monohydrate aqueous solution.
(ii) Centrifuge the mixture.
(iii) Collect about 2g of the supernatant separated by centrifugation.
(iv) Measure the mass of the solid content (remaining amount (g)) after heating and drying the collected supernatant of about 2g at 150°C for 30 minutes.
(v) Calculate the value of aggregation property by the following formula.

Formula: Aggregation property=1-(mass of solid content (g)/mass of collected supernatant (g)×5%)

Examples of the resin fine particles having the aggregation property of 0.2 or less include VYLONAL MD2000 manufactured by Toyobo Co., Ltd., Mowinyl 6969D manufactured by Japan Coating Resin Co., Ltd., and EVAFANOL HA-560 manufactured by Nicca Chemical Co., Ltd.
Hereinafter, each resin will be described.

(Polyester resin)

The polyester resin having a polyester skeleton as water-insoluble resin fine particles can be obtained by using a polyhydric alcohol component and a polyvalent carboxylic acid component such as a polyvalent carboxylic acid, a polyvalent carboxylic acid anhydride, and a polyvalent carboxylic acid ester.
Examples of the polyhydric alcohol component include a divalent alcohol (diol), and specific examples thereof include alkylene glycol (ethylene glycol, 1,2-propylene glycol, 1,3-propylene glycol, 1,4-butylene glycol, 1,6-hexanediol, and the like) having 2 to 36 carbon atoms; alkylene ether glycol (diethylene glycol, triethylene glycol, dipropylene glycol, polyethylene glycol, polypropylene glycol, polybutylene glycol, and the like) having 4 to 36 carbon atoms; alicyclic diol (1,4-cyclohexanedimethanol, hydrogenated bisphenol A, and the like) having 6 to 36 carbon atoms; alkylene oxide (ethylene oxide (hereinafter abbreviated as EO), propylene oxide (hereinafter abbreviated as PO), butylene oxide (hereinafter abbreviated as BO) adducts (in the range of 1 to 30 moles added) having 2 to 4 carbon atoms of the alicyclic diol; or alkylene oxides (such as EO, PO, and BO) adducts (in the range of 2 to 30 moles added) having 2 to 4 carbon atoms of bisphenols (such as bisphenol A, bisphenol F, and bisphenol S). These may be used in one type alone, or it may be used in combination of two or more types.
Examples of the polyvalent carboxylic acid component include divalent carboxylic acids (dicarboxylic acids), and specific examples thereof include alkanedicarboxylic acids (succinic acid, apidic acid, sebacic acid, and the like) and alkenylsuccinic acids (dodecenylsuccinic acid, and the like) having 4 to 36 carbon atoms, alicyclic dicarboxylic acids (dimer acids (dimerized linoleic acid), and the like) having 4 to 36 carbon atoms, alkene dicarboxylic acids (maleic acid, fumaric acid, citraconic acid, mesaconic acid, and the like) having 4 to 36 carbon atoms, and aromatic dicarboxylic acids (phthalic acid, isophthalic acid, and terephthalic acid or derivatives thereof, naphthalene dicarboxylic acid, and the like) having 8 to 36 carbon atoms. These may be used in one type alone, or it may be used in combination of two or more types.
As the polyester resin, a polyester resin having an anionic group in the molecule, and more preferably a polyester resin containing a sulfonic acid group. As a known synthesis method for obtaining a polyester containing a sulfonic acid group, for example, it can be obtained by a method such as a polycondensation reaction between a dicarboxylic acid having a sulfonic acid group and a diol, or can be obtained by a method such as a polycondensation reaction between a dicarboxylic acid and a diol having a sulfonic acid salt.
Examples of the dicarboxylic acid component having a sulfonic acid group include 2-sulfoterephthalic acid, 5-sulfoisophthalic acid, 4-sulfonaphthalene isophthalic acid-2,7-dicarboxylic acid and 5-(4-sulfophenoxy)isophthalic acid, and alkali metal salts thereof.
Examples of the diol having a sulfonic acid group include 2-sulfo-1,4-butanediol, 2,5-dimethyl-3-sulfo-2,5-hexanediol, or alkali metal salts thereof.
The number average molecular weight of the polyester resin is preferably in the range of 1000 to 50000, and more preferably in the range of 2000 to 20000.
As the polyester resin, a commercially available product may be used, and examples of the commercially available product of the water-dispersible polyester resin having a sulfonic acid group include VYLONAL MD-1100, MD-1200, MD-1245, MD-1480, MD-1500, and MD-2000 manufactured by Toyobo Co., Ltd., PLAS COAT Z-221, Z-446, Z-561, Z-880, and Z-3310 manufactured by GOO Chemical Co., Ltd., and PESRESIN A-520, A-613D, A-615GE, A-640, A-645GH, A-647GEX, A-110F, and A-160P manufactured by Takamatsu Oil & Fat Co., Ltd. Among them, the resin having a glass transition temperature of 40 to 90°C is particularly preferable, and examples thereof include VYLONAL MD-1100, MD-1200, MD-1245, MD-1500, and MD-2000 manufactured by Toyobo Co., Ltd., PLAS COAT Z-221, Z-446, and Z-561 manufactured by GOO Chemical Co., Ltd., and PESRESIN A-520, A-613D, A-615GE, A-640, A-645GH, and A-647GEX manufactured by Takamatsu Oil & Fat Co., Ltd. These may be used in one type alone, or it may be used in combination of two or more types.

(Urethane resin)

As the urethane resin as the water-insoluble resin particles, those having a hydrophilic group can be used.
The urethane resin is preferably a water dispersion in which a self-emulsifying urethane having a water-soluble functional group is dispersed in the molecule thereof, or a water dispersion of a forced-emulsifying urethane emulsified under strong mechanical shearing force by using surfactant in combination. The urethane resin in the water dispersion can be obtained by the reaction of a polyol with an organic polyisocyanate and a hydrophilic group-containing compound.
Examples of the polyol that can be used for preparing the water dispersion of the urethane resin include polyester

polyol, polyether polyol, polycarbonate polyol, polyolefin-based polyol, and the like.

Examples of the polyester polyol include low-moleculate polyols such as ethylene glycol, diethylene glycol, triethylene glycol, 1,2- and 1,3-propylene glycol, neopentyl glycol, 1,3- and 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexanedimethanol; and a condensate with polyvalent carboxylic acids such as succinic acid, glutaric acid, adipic acid, sebacic acid, phthalic acid, isophthalic acid, terephthalic acid, trimellitic acid, tetrahydrofuranic acid, endomethinetetrahydrofuranic acid, and hexahydrophthalic acid.

Examples of the polyether polyol include polyethylene glycol, polypropylene glycol, polyethylene polytetramethylene glycol, polypropylene polytetramethylene glycol, and polytetramethylene glycol.

Examples of the polycarbonate polyol can be obtained by reaction of carbonic acid derivatives such as diphenyl carbonate, dimethyl carbonate or phosgene with diols. Examples of the diol include ethylene glycol, diethylene glycol, triethylene glycol, 1,2- and 1,3-propylene glycol, neopentyl glycol, 1,3- and 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexanedimethanol.

Examples of the organic polyisocyanate that can be used for preparing the water dispersion of the urethane resin include aromatic isocyanates such as tolylene diisocyanate (TDI), diphenylmethane diisocyanate (MDI), polymeric MDI, xylylene diisocyanate (XDI), and tetramethylxylylene diisocyanate (TMXDI); aliphatic isocyanates such as hexamethylene diisocyanate (HMDI); and cycloaliphatic isocyanates such as isophorone diisocyanate (IPDI), 4,4'-dicyclohexylmethane diisocyanate (hydrogenated MDI, H12MDI). These may be used only one type alone, or it may be used in combination of two or more types.

Examples of the hydrophilic group-containing compound that can be used for preparing the water dispersion of the urethane resin include carboxylic acid-containing compounds such as 2,2-dimethylolpropionic acid, 2,2-dimethylolbutanoic acid, 2,2-dimethylolbutyric acid, 2,2-dimethylolvaleric acid, and glycine, and derivatives such as sodium, potassium, and amine salts thereof; and sulfonic acid-containing compounds such as taurine (that is, aminoethylsulfonic acid) and ethoxypolyethylene glycol sulfonic acid, and derivatives such as sodium, potassium, and amine salts thereof.

The urethane resin can be obtained by a known method. For example, an urethane prepolymer can be obtained by mixing the above-described polyol, an organic polyisocyanate, and a hydrophilic group-containing compound and reacting the mixture at 30 to 130°C for 30 minutes to 50 hours.

The urethane prepolymer is extended by a chain extender and polymerized to form an urethane resin having a hydrophilic group. The chain extender is preferably water and/or an amine compound. By using water or an amine compound as the chain extender, the isocyanate-terminated prepolymer can be efficiently extended by reacting with the free isocyanate in a short time.

Examples of the amine compound as a chain extender include aliphatic polyamines such as ethylenediamine and triethylenediamine; aromatic polyamines such as metaxylenediamine and tolylenediamine; and polyhydrazino compounds such as hydrazine and adipic dihydrazide. The above amine compound may contain, together with the above polyamine, a monovalent amine such as dibutylamine or methyl ethyl ketoxime as a reaction terminator to such an extent that polymerization is not significantly inhibited.

In synthesizing the urethane prepolymer, a solvent which is inert with isocyanate and can dissolve the urethane prepolymer may be used. Examples of these solvents include dioxane, methyl ethyl ketone, dimethylformamide, tetrahydrofuran, N-methyl-2-pyrrolidone, toluene, and propylene glycol monomethyl ether acetate. These hydrophilic organic solvents used in the reacting step are preferably removed finally.

In synthesizing the urethane prepolymer, a catalyst such as an amine catalyst (for example, triethylamine, N-ethylmorpholine, triethyldiamine, and the like), a tin-based catalyst (for example, dibutyltin dilaurate, dioctyltin dilaurate, tin octylate, and the like), and a titanium-based catalyst (for example, tetrabutyl titanate, and the like) may be added to accelerate the reaction.

The number average molecular weight of the urethane resin is preferably as large as possible by introducing a branched structure or an internal crosslinked structure, and is preferably 50000 to 10000000. When the molecular weight is within the above range, the urethane resin becomes slightly soluble in the solvent, so that a coating film excellent in weather resistance and water resistance can be obtained. The number average molecular weight (Mn) is a value measured by gel permeation chromatography (GPC), and can be obtained from a calibration curve prepared with a polystyrene reference sample using, for example, "RID-6A" manufactured by Shimadzu Corporation (column: "TSK-GEL" manufactured by Tosoh Corporation, solvent: tetrahydrofuran (THF), column temperature: 40°C).

As the above urethane resin, a commercially available product may be used. Examples of the commercially available product of the above urethane resin having a glass transition temperature of 40 to 90°C include Neorez R-967, R-600, and R-9671 manufactured by Kusumoto Chemicals, Ltd., EVAFANOL HA-560 manufactured by Nikka Chemical Co., Ltd., and SF870 manufactured by DKS Co., Ltd.

(Acrylic resin)

The acrylic resin as the water-insoluble resin fine particles can be obtained by using a copolymer with an acrylic acid ester component, a methacrylic acid ester component, a styrene component, or the like.
Examples of the acrylic acid ester component and the methacrylic acid ester component include methyl (meth) acrylate, ethyl (meth)acrylate, propyl (meth)acrylate, butyl (meth)acrylate, 2-hydroxyethyl (meth)acrylate, 2-hydroxypropyl (meth)acrylate, 4-hydroxylbutyl (meth)acrylate, cyclohexyl (meth)acrylate, tetrahydrofurfuryl (meth)acrylate, isobornyl (meth)acrylate, benzyl (meth)acrylate, 2-hydroxybutyl (meth)acrylate, benzyl (meth)acrylate, glycidyl (meth)acrylate, (meth)acrylate, di(meth)acrylic acid (di)ethylene glycol, di(meth)acrylic acid-1,4-butanediol, di(meth)acrylic acid-1,6-hexanodiol, tri(meth)acrylic acid trimethylolpropane, di(meth)acrylic acid glycerin, (methacrylic acid-2-ethylhexyl, lauryl (meth)acrylate, stearyl (meth)acrylic acid, and acrylic amide.
Examples of the styrene component include styrene, 4-methylstyrene, 4-hydroxystyrene, 4-acetoxystyrene, 4-acetylstyrene and styrenesulfonic acid. These components may be used only one type alone, or it may be used in combination of two or more types.
The number average molecular weight (Mn) of the above acrylic resin is preferably 1000 to 50000, and more preferably 2000 to 20000. This is because when the number average molecular weight (Mn) of the above acrylic resin is 1000 or more, the aggregation force of the coated film is enhanced, the adhesion is improved, and when the number average molecular weight (Mn) is 50000 or less, the solubility in the organic solvent is improved, and the particle diameter of the emulsified dispersion is accelerated to be miniaturized. The number average molecular weight (Mw) is a value measured by gel permeation chromatography (GPC), and can be obtained from a calibration curve prepared with a polystyrene reference sample using, for example, "RID-6A" manufactured by Shimadzu Corporation (column: "TSK-GEL" manufactured by Tosoh Corporation, solvent: tetrahydrofuran (THF), column temperature: 40°C).
As the above acrylic resin, a commercially available product may be used. Examples of the commercially available product of the above acrylic resin having a glass transition temperature of 40 to 90°C include acrylic emulsions such as Mowinyl 6899D, 6969D, and 6800 manufactured by Japan Coating Resin Co., Ltd., and TOCRYL W-7146, W-7147, W-7148, W-7149, and W-7150 manufactured by Toyochem Co., Ltd.

(Composite resin fine particles)

The composite resin fine particles that can be contained in the ink are preferably composite resin fine particles obtained by emulsifying an acrylic resin by an urethane resin. That is, it is preferable that the composite resin fine particles have an inner layer made of an acrylic resin and a surface layer made of an urethane resin.
Here, the above urethane resin is present at the interface between the acrylic resin as the water-insoluble resin particles and the water as the continuous phase, and functions as a water-insoluble resin particle layer different from the resin for protecting the water-insoluble resin particles.
By emulsifying the acrylic resin by the urethane resin to form the composite resin fine particles in this way, the physical properties of the image (coating film) can be improved and the storage stability of the composite resin fine particles can be improved, as compared with the case where the acrylic resin and the urethane resin are respectively emulsified and mixed.
In the above composite resin fine particles obtained by emulsifying the acrylic resin by the urethane resin, the value of the mass ratio (U/A) of the urethane resin (U) to the acrylic resin (A) is preferably 40/60 to 95/5. When the presence ratio of the urethane resin (U) is within the above range, compatibility with a dispersant is improved, and solvent resistance is also improved. When the presence ratio of the acrylic resin (A) is within the above range, adhesion to the acrylic film is excellent. In the above presence ratio, the value of the mass ratio (U/A) of the urethane resin (U) to the acrylic resin (A) is preferably 40/60 to 80/20.
The total resin concentration obtained by combining the acrylic resin and the urethane resin in the composite resin fine particles is not particularly limited, but is preferably 5.0 % by mass or more, and more preferably 10.0 to 70.0 % by mass. When the resin concentration is within the above range, the fixability between the base material and the ink is improved.
In the emulsification of an acrylic resin using an urethane resin, surfactant which acts as an emulsifier together with the urethane resin can be used. Here, the storage stability of the composite resin fine particles can be improved by adding an emulsifier.
As the emulsifier, anionic surfactant and nonionic surfactant can be used. In the present invention, either one of the anionic surfactant and the nonionic surfactant is preferably used, and both are more preferably used. The total blending amount of the anionic surfactant and the nonionic surfactant is preferably 1.0 to 20.0 parts by mass with respect to 100 parts by mass of the total resin. When the total blending amount of the anionic surfactant and the nonionic surfactant is 20.0 parts by mass or less, the water resistance and the solvent resistance can be improved.
The value of the blending mass ratio (X/Y) of the anionic surfactant (X) and the nonionic surfactant (Y) is

preferably 100/0 to 50/50. When the blending amount of the anionic surfactant is within the above range, the emulsifiability and the storage stability can be further improved.

Examples of the anionic surfactant that can be used for emulsification include alkyl sulfates, polyoxyethylene alkyl ether sulfates, sulfosuccinates, alpha olefin sulfonates, N-acylamino acid salt, carboxylates, and phosphates. Among these, sulfosuccinate and alpha olefin sulfonate are preferable.

Examples of the salt types include, but are not limited to, metal salts such as sodium salts, potassium salts, and magnesium salts, and triethanolamine salts.

Examples of the nonionic surfactant that can be used for emulsification include polyoxyethylene alkyl ethers, polyoxyethylene alkyl phenyl ethers, polyoxyethylene alkyl amine ethers, polyoxyethylene fatty acid esters, sorbitan fatty acid esters. sucrose fatty acid esters, and the like. Among these, polyoxyethylene alkyl ethers and polyoxyethylene alkyl phenyl ethers are preferable.

The average particle size of the above-described composite resin fine particles is not particularly limited, but is preferably 10 to 500nm, more preferably 10 to 300nm, and still more preferably 10 to 200nm. The average particle size can be measured by a commercially available particle size measuring instrument using a dynamic light scattering method, an electrophoresis method, or the like, but the measurement by a dynamic light scattering method is easy, and the particle size area can be measured accurately.

By using the composite resin fine particles obtained by emulsifying an acrylic resin by an urethane resin, it is possible to improve the fixability of the image (coating film) to an absorbent base material or a non-absorbent base material.

<Water-soluble solvent>

The water-soluble solvent contained in the ink according to the present invention is a water-soluble solvent having a boiling point within the range of 150°C to 250°C.

Examples of such a water-soluble solvent include alcohols, polyhydric alcohols, amines, amides, glycol ethers, and 1,2-alkanediols having 4 or more carbon atoms, and examples thereof include those exemplified in the treatment liquid.

One or two or more kinds selected from the above-described water-soluble solvents may be combined and contained in the ink.

The content of the water-soluble solvent in the ink is not particularly limited, but is preferably in the range of 10 to 60% by mass.

<Surfactant>

The ink according to the present invention may contain a surfactant to improve ink-ejection stability and to control the spread (dot-diameter) of the droplets landed on the recording medium.

The surfactant which can be used in the ink according to the present invention can be used without any particular limitation, and examples thereof include those exemplified in the treatment liquid, but as described above, it is preferable that the same surfactant as that contained in the ink is not contained in the treatment liquid.

The content of the surfactant in the ink is not particularly limited, but is preferably in the range of 0.1 to 5.0% by mass.

<Water>

The water contained in the ink according to the present invention is not particularly limited, and may be ion-exchanged water, distilled water, or pure water.

In the ink used in the present invention, in addition to the above, various known additives such as a polysaccharide, a viscosity adjusting agent, a specific resistance adjusting agent, a film forming agent, an ultraviolet absorber, an antioxidant, an antifading agent, an antimold agent, a rust inhibitor, and the like can be appropriately selected and used as needed, and for example, oil droplet fine particles such as liquid paraffin, dioctyl phthalate, tricresyl phosphate, and silicone oil, the ultraviolet absorbers described in JP S57-74193A, JP S57-87988A, JP S62-261476A, and the like, the antifading agents described in JP S57-74192A, JP S57-87989A, JP S60-72785A, JP S61-146591A, JP H01-95091A, JP H03-13376A, and the like, and fluorescent whitening agents described in JP S59-42993A, JP S59-52689A, JP S62-280069A, JP S61-242871A, JP H04-219266A, and the like, in accordance with the injection stability, the printhead and ink cartridge compatibility, the preservation stability, the image preserving property, and other objectives for improving various performance.

In the ink used in the present invention and having the above configuration. the viscosity of the ink is preferably from 1 to 40mPa·s, more preferably from 2 to 10mPa·s at 25°C.

[Inkjet Recording Method]

The inkjet recording method of the present invention is an inkjet recording method for recording an image using the ink set containing the treatment liquid and the ink described above. With the method using the ink set, for example, the application of the treatment liquid constituting the ink set of the present invention and the printing using the ink constituting the ink set can be performed continuously and efficiently to the surface of the base material using one inkjet printer. In addition, it is possible to print characters, symbols, and the like having a small variation of the dot-diameters between the base materials and having excellent image quality.
Specifically, the inkjet recording method of the present invention is an inkjet recording method for recording an image using the ink set of the present invention described above, wherein the treatment liquid is applied to a base material, and then the ink is applied to a region to which the treatment liquid is applied while the treatment liquid is wet without undergoing a heat-drying step.
That is, the method includes a step of applying the treatment liquid to a recording region of a base material (treatment liquid applying step), and a step of applying the ink to the region to which the treatment liquid is applied while the treatment liquid is wet, by an inkjet recording system (ink applying step).
In addition to the above steps, it is preferable that the inkjet recording method of the present invention includes an ink heating and drying step of heating and drying the treatment liquid and the ink applied on the base material after the ink applying step to form a treatment liquid layer and an ink layer.
Further, in the ink applying step, it is preferable to apply the ink to the region to which the treatment liquid is applied in a state in which the drying rate of the treatment liquid is 30% or less, and it is preferable to perform the ink applying step within 10 seconds after the treatment liquid applying step. In particular, it is preferable to perform the ink applying step within 0.1 to 5 seconds after the treatment liquid applying step, with the drying rate of the treatment liquid in the range of 1 to 10%.

<Base material>

The base material (recording medium) applicable to the inkjet recording method of the present invention is not particularly limited, and may be an absorbent base material made of an absorbent material or a non-absorbent base material made of a non-absorbent material, but is preferably a non-absorbent base material from the viewpoint of exhibiting the effects of the present invention.
In the present invention, the term "absorbent" refers to an absorbability to water, and the term "non-absorbent" refers to a non-absorbability to water.
As the non-absorbable base material, a known plastic film can be used.
Specific examples of the known plastic film include polyester films such as polyethylene terephthalate, and the like, polyethylene films, polypropylene films, polyamide-based films such as nylon, polystyrene films, polyvinyl chloride films, polycarbonate films, polyacrylonitrile films, and biodegradable films such as polylactic acid films.
In order to impart gas barrier properties, moisture proofness, fragrance retention, and the like, one in which one side or both sides of the film are coated with polyvinylidene chloride or a film obtained by vapor depositing a metal oxide can also be preferably used. As the non-absorbent film, both unstretched films or stretched films can be preferably used.
The thickness of the base material is preferably in the range of 10 to 120$\mu$m, more preferably 12 to 60$\mu$m in the case of a plastic film.
Further, as a non-absorbent base material, metal base materials such as a tin plate or a tin-free steel plate (TFS plate, thickness: 0.1 to 0.6$\mu$m) for three-piece can use are also preferably used, and for example, it can be suitably used for a packaging material for canned foods in which a thermosetting resin is provided as a coating layer. In the packaging material for the canned foods, for example, it is common to use an epoxy-phenol-based coating material or a polyester-based laminating agent on the food side, and use a polyester-based or acrylic-based thermosetting coating material on the outer side, in order to block air, water, and light and seal the food inside.
Hereinafter, each step of the inkjet recording method will be described.

<Treatment liquid Applying step>

In the treatment liquid applying step, the above-described treatment liquid is applied onto the recording medium which is a base material.
The applying method of the treatment liquid onto the recording medium is not particularly limited, and preferable examples thereof include a roller coating method, a curtain coating method, a spray coating method, and an inkjet method. Among them, a roller coating method is preferable from the viewpoint that a roller coater or the like can be used in connection with an inkjet apparatus, and efficient coating can be performed even when the viscosity is relatively high.
In addition, as a step of applying the treatment liquid, a step of using an inkjet method is preferable in that it is not

necessary to apply the coagulant to the ink non-application region, so that the coagulant which is unreacted with the ink is not liberated and cloudiness does not occur.

In such cases, as will be described later, when the base material to be used is a metal base material or the like, it is preferable to dispose a metal base material on the conveyance belt to coat and form the treatment liquid layer while the belt is conveyed, or to use a flatbed-type printer for fixing a base material to form the treatment liquid layer.

<Ink applying step>

The ink applying step is a step of applying the ink of the above-described ink set by an inkjet method at the same time as or immediately after forming the treatment liquid layer on the recording medium which is a base material. In particular, it is preferable to apply the ink to the region to which the treatment liquid is applied after the treatment liquid applying step in a state in which the drying rate of the treatment liquid is 30% or less, and it is preferable to apply the ink to the region to which the treatment liquid is applied within 10 seconds after applying the treatment liquid to the base material.

The drying rate of the treatment liquid is defined by the following formula.

(Drying rate of treatment liquid) = 1 - ((mass of treatment liquid after drying (g)) / (mass of treatment liquid before drying (g))

By applying the ink in a state in which the drying rate of the treatment liquid is 30% or less, the ink and the treatment liquid are appropriately mixed, and the effect of the present invention can be more remarkably exhibited.

Further, by applying the ink within 10 seconds after applying the treatment liquid to a base material, the penetration of the treatment liquid into the absorbent base material and the repelling of the treatment liquid in the non-absorbent base material can be suppressed, and higher image quality can be achieved.

In order to set the drying rate of the treatment liquid to 30% or less, as described above, the time until the application of the ink after the application of the treatment liquid is adjusted, the temperature of the recording medium is appropriately adjusted, and the like can be exemplified.

Further. in the ink applying step, it is preferable to adjust the amount of ink droplets so that the applied amount (also referred to as "application amount") of ink per unit area is within the range of 2 to 25 times the applied amount of the treatment liquid, in that higher image quality can be achieved, and a more preferable range of the above applied amount is 2.5 to 3.5 times.

The inkjet method is not particularly limited, and a printer including an inkjet head loaded with an ink can be used. Specifically, the ink is ejected from a nozzle of the inkjet head as droplets based on the digital signal and is landed on the treatment liquid layer of the base material to perform printing.

The inkjet head may be an inkjet head of either an on-demand system or a continuous system. Examples of the inkjet head of the on-demand system include electro-mechanical conversion systems including single cavity, double cavity, vendor, piston, shared mode, and shared wall types, and electro-thermal conversion systems including thermal inkjet and bubble jet types ("Bubble Jet" is a registered trademark of Canon Inc.).

Among the inkjet heads above, it is preferable to use an inkjet head in which a piezoelectric element is used as an electro-mechanical conversion element used in an electro-mechanical conversion system (also referred to as a piezo-type inkjet head).

In addition, the ink jet printer may be an inkjet head of either a scanning system or a single-pass system. For the single-pass method, it is preferable to use an inkjet head of a line-head system.

The inkjet head of the line-head system is an inkjet head with a length equal to or greater than the width of the print range. As the inkjet head of the line-head system, one head that is equal to or larger than the width of the printing range may be used, or a plurality of heads may be combined to be equal to or larger than the width of the printing range.

Further, a plurality of heads may be arranged side by side so that their nozzles are in a staggered arrangement, and the resolution of the heads as a whole may be increased.

The conveyance speed of the recording medium which is a base material can be set, for example, in the range of 1 to 120m/min. The higher the conveyance speed, the higher the image forming speed. According to the present invention, it is possible to obtain a high-definition image with high ink fixation even at a very high linear velocity of a linear velocity of 50 to 120m/min that is applicable to an inkjet image forming process of a single-pass system.

<Ink heating and drying step>

In the ink heating and drying step, the ink applied on the recording medium which is a base material, that is, the region to which the ink is applied is heated. Thus, the ink and the treatment liquid can be dried.

In the ink heating and drying step, the heating temperature of the region to which the ink is applied is preferably in

the range of 60 to 200° C. The heating time of the ink is appropriately adjusted in accordance with the type of the recording medium and the applied amount of ink.

By heating the region to which the ink is applied in this way, water, water-soluble solvents, and the like, which are solvent components of the treatment liquid and the ink, are removed, and at the same time, in particular, in the metal base material, the polyvalent metal salt is dried and thermally decomposed at a temperature equal to or higher than the thermal decomposition temperature. In addition, the image abrasion resistance and the adhesion to the non-absorbable base material are improved.

Further, the heating and drying may be performed by using a non-contact heating type drying device such as a drying furnace or a hot air blower, or by using a contact heating type drying device such as a hot plate or a heat roller.

The drying temperature can be obtained by measuring any one temperature selected from (a) an ambient temperature such as an in-furnace temperature or a hot air temperature if a non-contact heating type drying apparatus such as a drying furnace or a hot air blower is used, (b) a temperature of a contact heating part if a contact heating type drying apparatus such as a hot plate or a heat roller is used, or (c) a surface temperature of a surface to be dried, during the entire period of drying of a treatment liquid, and it is more preferable to measure (c) a surface temperature of a surface to be dried, as a measurement point.

The thickness of the ink layer thus obtained is preferably in the range of 0.3 to 3.0μm, and more preferably in the range of 0.3 to 2.0μm. When the thickness of the ink layer is 0.3μm or more, the adhesion and the abrasion resistance of the image tend to be increased. When the thickness of the ink layer is 3.0μm or less, the deformation stress applied to the ink layer can be reduced, so that the adhesion of the image is less likely to be impaired.

[Recording apparatus]

FIG. 1 is a schematic diagram of a preferred recording apparatus for the present invention. However, the present invention is not limited thereto.

The recording apparatus 1 mainly includes a treatment liquid applying part 10 and an ink applying part 20. In the treatment liquid applying part 10, a treatment liquid layer C is formed on the base material F, and the ink layer R is formed by the ink applying part 20.

The treatment liquid applying part 10 is not particularly limited as long as it can apply the treatment liquid to the base material, but is preferably an inkjet head 21 in the present invention. In addition to the inkjet head 21, for example, a roll coater or the like may be used.

The ink applying part 20 is an inkjet head 21 capable of ejecting an ink.

In such a recording apparatus 1, the treatment liquid droplets 12 are ejected from an inkjet head 11 onto the base material F fed out from the feeding roller 30, thereby forming the treatment liquid layer C.

Next, ink droplets 22 are ejected from the inkjet head 21 onto the treatment liquid layer C to form an ink layer R, and the region to which the ink is applied is heated and dried by a second dryer 23. Thereafter, the base material F on which the treatment liquid layer C and the ink layer R are formed is wound up by the winding roller 40, and an image recorded matter is obtained.

Although FIG. 1 illustrates a case where the base material F is a film base material, in the case of a metal base material or the like, the metal base material can be disposed on the conveyance belt, and the treatment liquid layer C and the ink layer R can be applied and formed in one pass while the belt is conveyed.

In addition, although the apparatus is configured to apply an ink after applying the treatment liquid onto the base material in FIG. 1, an apparatus configured to apply a treatment liquid and an ink at the same time may be used, however, it is preferable to eject an ink from an inkjet head in a state in which the drying rate of the treatment liquid layer is 30% or less.

Further, as an apparatus other than the recording apparatus shown in FIG. 1, a flatbed-type printer is preferably used for applying the treatment liquid and the ink. In the flatbed-type printer, the base material is fixed, and the inkjet head can be moved in a main scanning direction and a sub scanning direction intersecting the main scanning direction, and can print without conveying the base material. For metal base materials such as tinplate, it is preferable to use a flatbed-type printer that does not need to convey the base material because roll to roll conveyance is not possible, as is the case with resin film materials.

As such a flatbed type printer, a printer described in FIG. 1 of JP 2015-74161A and FIG. 1 of JP 2017-177578A can be used as an example.

[Image recorded matter]

The image recorded matter according to the present invention preferably includes a base material, a treatment liquid layer formed on the base material using the treatment liquid, and an ink layer formed on the treatment liquid layer using the ink.

As shown in FIG. 2, in the image recorded matter P, the treatment liquid according to the present invention is

applied by a roll coater or the like or applied by ejecting from an inkjet head on the base material F to form a treatment liquid layer C. The ink is ejected from the inkjet head and fixed to the position where the treatment liquid layer C is fixed, and an image recording layer R is formed.

The above configuration represents a minimum configuration, and another functional layer may be formed between the base material and the treatment liquid layer, or a non-absorbent film base material or the like may be bonded to an upper layer of the ink layer via, for example, a laminate adhesive layer. At least a configuration in which the treatment liquid layer and the ink layer are in contact with each other is essential.

One example of the image recorded matter of the present invention is an the image recorded matter using at least a first the treatment liquid and the ink according to the present invention, and it is preferred embodiment in which a first layer containing a thermosetting resin, a second layer containing the treatment liquid, a third layer containing the ink, and a fourth layer containing a thermosetting resin are laminated on the metal base material in this order.

Specific examples of the image recorded matter include packaging materials for packaging canned foods, retort foods, beverages, and the like.

FIG. 3 is a cross-sectional view of a packaging material for canned foods, which is an example of the image recorded matter of the present invention.

A thermosetting resin (for example, TW-1407 series manufactured by T&K TOKA Corporation) is roller-coated on the tinplate base material 51 to form a thermosetting resin layer (base coat) 52, and an image is formed thereon by the treatment liquid layer 53 and the ink layer 54. Next, a thermosetting resin (for example, AX-10 series manufactured by T&K TOKA Corporation) is roller-coated to form a thermosetting resin layer (top coat) 55, and then heat-cured and dried to obtain a packaging material 50 for canned foods.

## Examples

Hereinafter, the present invention will be described in detail with reference to Examples, but the present invention is not limited thereto. In Examples below, unless otherwise specified, the operations were performed at room temperature (25°C). Further, unless otherwise specified, "%" and "part" mean "% by mass" and "part by mass", respectively.

[Preparation of Treatment liquid T1]

To 3% by mass of calcium acetate hydrate as a polyvalent metal salt, 14% by mass of dipropylene glycol, 14% by mass of propylene glycol, 10% by mass of glyceline, 1% by mass of polyether-modified silicone BYK3450, 0.1% by mass of antifungal agent (Proxel GXL (S)), and ion-exchanged water (residual; the amount that makes total amount 100% by mass) were added while stirring, and the obtained mixture was filtered by a 1μm filter to obtain the treatment liquid T1.

[Preparation of Treatment liquids T2 to T6]

The treatment liquids T2 to T6 were prepared in the same manner as in the preparation of the treatment liquid T1 except that the types and addition amounts of the polyvalent metal salt, solvent, and surfactant, and the addition amounts of water were changed as described in Table I below.

The abbreviations in Table I are as follows.

<Solvent>

"DPG": diethylene glycol
"PG": propylene glycol
"1,2-HDO":1,2-hexanediol
"Gly": glycerin

<Surfactant>

"TEGOWET250": polyether-modified silicone TEGOWET-250 (manufactured by Evonik Japan Co., Ltd.) "BYK3450": polyether-modified silicone BYK-3450 (manufactured by BYK-Chemie Co., Ltd.) "BYK348": polyether-modified silicone BYK-348 (manufactured by BYK-Chemie Co., Ltd.)

<Antifungal agent>

"Proxel GXL (S)": 1,2-benzisothiazolin-3-one

[Physical Properties]

The dynamic surface tension, the static surface tension, and the dynamic surface tension after 30% drying were measured for each treatment liquid obtained by the following method.

<Dynamic surface tension>

For the treatment liquids T1 to T6 prepared above, the dynamic surface tension in the surface life of 10ms to 1000ms was measured using a dynamic surface tensiometer (BP-100: manufactured by KRUSS Scientific) using the maximum bubble pressure method. The measured temperature was adjusted to 25°C. The dynamic surface tensions (in mN/m) in the surface life of 15ms, 100ms, and 1000ms are shown in Tables I below. Here, the dynamic surface tension in the surface life of 15ms is referred to as "dynamic surface tension A" described later.

<Static surface tension>

For the ink-treatment liquids T1 to T6 prepared above, a static surface tension at 25°C was measured using a static surface tensiometer (CBVP-Z: manufactured by Kyowa Interface Science Co., Ltd.) using the Wilhelmy method. The measured values (in mN/m) are shown in Tables I below.

<Dynamic surface tension after 30% drying>

For each of the ink-treatment liquid T1 to T6 prepared above, 100 grams were weighed into a shallow container and dried in a vacuum atmosphere at 25°C until the weight of the liquid was 70 grams. Thereafter, the dynamic surface tension of each treatment liquid was measured by the method described above, and this was defined as the dynamic surface tension B after 30% drying. Furthermore, the difference "(B-A)" between the dynamic surface tension B after 30% drying and the dynamic surface tension A in the surface life of 15ms of the treatment liquid measured in the above was calculated. The results are shown in Table I below.

[Evaluation]

<Injection stability>

The treatment liquids T1 to T6 prepared above was filled into an independent drive inkjet head (360npi, ejection amount 14pL, 1024 nozzles) manufactured by Konica Minolta, Inc., and a continuous ejection test was performed for 30 minutes by a flash-synchronized droplet observation device. The injection stability was then evaluated according to the following criteria.

(Criteria)

○ (circle): During the 256 nozzles evaluated, all 256 nozzles eject successfully.
△ (triangle): During the evaluated 256 nozzles, one or more and less than five abnormal ejection nozzles are observed. × (cross mark): During the evaluated 256 nozzles, five or more abnormal ejection nozzles are observed.

<Treatment liquid storage stability>

The treatment liquids T1 to T6 prepared above were stored at 60°C for 2 weeks and then visually evaluated according to the following criteria.

(Criteria)

○ (circle): No abnormal changes such as cloudiness or separations are visually observed in the treatment liquid after the storage at 60 °C for 2 weeks.
× (cross mark): The treatment liquid after the storage at 60°C for 2 weeks is slightly cloudy or separated.
× (cross mark): The treatment liquid after the storage at 60°C for 2 weeks is clearly cloudy or separated.

[Table 1]

TABLE I

| Treatment liquid No. | | T1 | T2 | T3 | T4 | T5 | T6 |
|---|---|---|---|---|---|---|---|
| Polyvalent metal salt [% by mass] | Calcium Acetate hydrate | 3.0 | – | 4.0 | 3.0 | 3.0 | 3.0 |
| | Magnesium Acetate tetrahydrate | – | 5.0 | – | – | – | – |
| Solvent [% by mass] | DPG | 14.0 | 14.0 | 25.0 | 45.0 | – | 10.0 |
| | PG | 14.0 | 14.0 | – | – | 19.0 | – |
| | 1,2-HDO | – | – | 20.0 | – | 3.0 | 5.0 |
| | Gly | 10.0 | 10.0 | – | – | – | – |
| Surfactant [% by mass] | TEGOWET250 | – | – | 1.0 | 1.0 | – | 3.0 |
| | BYK3450 | 1.0 | 1.0 | – | – | – | – |
| | BYK348 | – | – | – | – | 0.6 | – |
| Antifungal agent [% by mass] | Proxel GXL(S) | 0.1 | 0.1 | 0.1 | 0.1 | 0.1 | 0.1 |
| Water [% by mass] | | 57.9 | 55.9 | 49.9 | 50.9 | 74.3 | 78.9 |
| Dynamic surface tension [mN/m] | Surface life 15ms A | 28.4 | 29.0 | 34.6 | 30.5 | 36.5 | 24.2 |
| | Surface life 100ms | 22.6 | 23.0 | 31.7 | 25.7 | 30.3 | 22.0 |
| | Surface life 1000ms | 20.9 | 21.2 | 30.9 | 24.2 | 25.7 | 21.1 |
| Static surface tension [mN/m] | | 21.4 | 21.0 | 28.9 | 22.1 | 22.1 | 20.1 |
| Dynamic surface tension after 30% drying [mN/m] | Surface life 15ms B | 29.7 | 29.5 | 37.3 | 35.7 | 36.8 | 24.5 |
| B-A[mN/m] | | 1.3 | 0.5 | 2.7 | 5.2 | 0.3 | 0.3 |
| Evaluation | Ejection stability | ○ | ○ | ○ | ○ | △ | × |
| | Treatment liquid storability | ○ | ○ | △ | ○ | △ | × |
| Remark | | *1 | *1 | *1 | *1 | *2 | *2 |

*1: Present Invention *2: Comparative Example

As can be seen from the above, the treatment liquid of the present invention in which the dynamic surface tension in the surface life of 15ms is within the range of 25 to 35mN/m is excellent in injection stability and storage stability.

[Resin particle dispersion liquids P1 to P5]

Table II below shows the results of measuring the aggregation property and the glass transition temperature (Tg) of the resin fine particles in the resin fine particle dispersion liquids P1 to P5, which are commercially available products described in Table II below.

<Aggregation property>

The aggregation property was measured by the following method.

First, in order to prepare a mixture having 5% by mass of resin fine particles and 0.15% by mass of calcium acetate monohydrate, a calcium acetate aqueous solution in which calcium acetate monohydrate is dissolved in ion-exchanged water so as to be 0.30% by mass, and resin fine particle dispersion liquids P1 to P5 shown in Table II were used to prepare diluted solutions of the resin fine particle dispersion liquid prepared with ion-exchanged water so as to have a solid content of 10% by mass.

Next, 5g of the calcium acetate aqueous solution was added to 5g of the diluted solution of the resin fine particle dispersion liquid while stirring to prepare 10g of each mixture having a solid content of 5% by mass and a calcium acetate monohydrate of 0.15% by mass.

Then, 10g of each mixture was centrifuged at a centrifugal acceleration of 200G and a centrifugal time of 10 minutes using a centrifuge CF16RX manufactured by Hitachi Koki Co., Ltd., and about 2g of each supernatant was collected from the separated solutions.

Next, water was removed by heating each supernatant at 150°C for 30 minutes, and the mass of the solid remaining after heating was measured. The mass of the obtained solid content was substituted into the following formula to calculate the aggregation property, respectively.

Formula: Aggregation property=1-(mass of solid content (g)/(mass of collected supernatant (g)×5%))

<Glass transition temperature>

The glass transition temperature (Tg) of the resin particles was determined by reading the glass transition temperature Tg from the endothermic peak when the temperature was increased in the temperature range of-30 to 200°C at a heating rate of 10°C/min using a DSC (Differential Scanning Calorimeter).

[Table 2]

TABLE II

| Resin particle dispersion No. | Product name | Manufacturer | Polymer | Tg [°C] | Aggregation property |
|---|---|---|---|---|---|
| P1 | VYLONAL MD2000 | Toyobo Co., Ltd | Polyester resin | 67 | 0.01 |
| P2 | VYLONAL MD1480 | Toyobo Co., Ltd | Polyester resin | 20 | 0.10 |
| P3 | Mowinyl 6969D | Japan Coating Resin Co., Ltd. | Acrylic resin | 71 | 0.01 |
| P4 | Mowinyl 6763 | Japan Coating Resin Co., Ltd. | Acrylic resin | 13 | 0.97 |
| P5 | EVAFANOL HA-560 | Nicca Chemical Co., Ltd. | Urethane resin | 60 | 0.01 |

[Preparation of Magenta Ink]

<Preparation of Magenta pigment dispersion liquid D1>

A mixture in which 8% by mass of an anionic polymer dispersant (an acrylic dispersant having a carboxy group neutralized with dimethylaminoethanol ("Joncryl 819", acid value 75mgKOH/g, solid content 20% by mass, manufactured by BASF Japan Ltd.), 20% by mass of propylene glycol, 0.1% by mass of antifungal agent Proxel GXL(S), and ion-exchanged water (residual; the amount that makes total amount 100% by mass) were added to 20% by mass of a magenta pigment (mixed crystal of Pigment Red 122 and Pigment Violet 19) was premixed.
Then, it was dispersed using a bead mill in which zirconia beads of 0.3mm were filled in 50% by volume to prepare a pigment dispersion liquid D1 having a pigment content of 20% by mass.
The average particle size of the pigment particles contained in the pigment dispersion liquid was 140nm. The average particle size was measured by "Zetasizer Nano S-90" manufactured by Malvern Ltd.

<Preparation of Magenta pigment dispersion liquid D2>

Mmagenta pigment dispersion liquid D2 was prepared in the same manner as in the preparation of the magenta pigment dispersion liquid D1, except that the pigment dispersant was changed from the acrylic dispersant "Joncryl 819" to the nonionic polymer dispersant ("BYK190" manufactured by BYK). The average particle size of the pigment particles contained in the pigment dispersion liquid was 130nm.

<Preparation of Magenta Ink M1>

The commercially available resin fine particle dispersion liquid P1 (the addition amount is adjusted so that the resin fine particles (solid content) in the ink are 5% by mass), 21% by mass of propylene glycol, 5% by mass of glycerin, 0.2% by mass of surfactant KF351A (Shin-Etsu Silicone), 1% by mass of surfactant E1010 (Nisshin Chemical Co., Ltd.), 0.1% by mass of antifungal agent Proxel GXL(S), and ion-exchanged water (residual; the amount that makes total amount 100% by mass) were added to 20% by mass (4% by mass as a solid content) of the magenta pigment dispersion liquid D1 while stirring, and the obtained mixture was filtered through a 1μm filter to obtain a magenta ink M1. There was no substantial compositional change before and after filtration.

<Preparation of Magenta Inks M2 to M15>

M1 to M15 were prepared in the same manner as in the preparation of the magenta ink M1, except that the types and the blending amounts of the resin fine particle dispersion liquids, the water-soluble solvents and surfactants, and the like were changed as described in Table III below.

[Preparation of Cyan ink]

<Preparation of Cyan pigment dispersion liquid D3>

A mixture in which 6% by mass of a pigment dispersant (an acrylic dispersant having dimethylaminoethanol neutralized carboxy group ("Joncryl 819", acid value 75mgKOH/g, solid content 20% by mass, manufactured by BASF Japan Ltd.), 20% by mass of propylene glycol, 0.1% by mass of antifungal agent Proxel GXL(S), and ion-exchanged water (residual; the amount that makes total amount 100% by mass) are added to 20% by mass of a cyan pigment (C.I. Pigment Blue 15:3), was premixed.
Then, it was dispersed using a bead mill in which zirconia beads of 0.3mm were filled in 50% by volume to prepare a cyan pigment dispersion liquid having a pigment content of 20% by mass. The average particle size of the pigment particles contained in the pigment dispersion liquid was 120nm.

<Preparation of Cyan Ink C1>

The commercially available resin fine particle dispersion liquid P1 (the addition amount is adjusted so that the resin fine particles (solid content) in the ink are 5% by mass), 21% by mass of propylene glycol, 5% by mass of glycerin, 0.2% by mass of surfactant KF351A (Shin-Etsu Silicone), 1% by mass of surfactant E1010 (Nissin Chemical Co., Ltd.), 0.1% by mass of antifungal agent, and ion-exchanged water (residual; the amount that makes total amount 100% by mass) were added to 20% by mass (4% by mass as a solid content) of the cyan pigment dispersion liquid D3 while stirring, and the obtained mixture was filtered through a 1μm filter to obtain a cyan ink C1. There was no substantial compositional change

before and after filtration.

< Preparation of Cyan Inks C2 and C3>

Cyan inks C2 and C3 were prepared in the same manner as in the preparation of the ink C1, except that the type and the blending amount of the water-soluble solvent and surfactant, the blending amount of the antifungal agent, and the like were changed as described in Table III below.
The abbreviations in III are as follows.

<Solvent>

"EG": ethylene glycol
"PG": propylene glycol
"1,2-PDO": 1,2-pentanediol
"1,2-HDO": 1,2-hexanediol"
"2Me-1,3-PDO": 2-methyl-1,3-propanediol
Gly: Glycerin
"DEGBE": diethylene glycol monobutyl ether

<Surfactant >

"E1010": acetylene glycol-based surfactant OLFINE E1010 (manufactured by Nisshin Chemical Industry Co.,, Ltd.)
"KF-351A" : silicone modified surfactant KF-351A (manufactured by Shin-Etsu Silicone)
"TEGOWET KL245" : polyether-modified silicone TEGOWET-KL245 (manufactured by Evonik Japan Co., Ltd.)
"TEGOWET 250" : polyether-modified silicone TEGOWET-250 (manufactured by Evonik Japan Co., Ltd.)
"TEGOWET 260" : polyether-modified silicone TEGOWET-260 (manufactured by Evonik Japan Co., Ltd.)
"BYK3450" : polyether modified silicone BYK-3450 (manufactured by BYK-Chemie Co., Ltd.)
"BYK3455" : polyether modified silicone BYK-3455 (manufactured by BYK-Chemie Co., Ltd.)
"BYK348" : polyether modified silicone BYK-348 (manufactured by BYK-Chemie Co., Ltd.)
"BYK349" : polyether modified silicone BYK-349 (manufactured by BYK-Chemie Co., Ltd..)

<Antifungal agent>

"Proxel GXL(S)": 1,2-benzisothiazolin-3-one

[Physical Properties]

The dynamic surface tension of each ink obtained was measured by the following method.

<Dynamic surface tension>

For the inks M1 to M15 and C1 to C3 prepared above, the dynamic surface tension in the surface life of 10ms to 1000ms was measured using a dynamic surface tensiometer (manufactured by BP-100:KRUSS Co., Ltd.) using a maximum bubble pressure method. The measured temperature was adjusted to 25°C. The dynamic surface tensions (in mN/m) in the surface life of 15ms, 100ms, 1000ms are shown in Table IV.

<Static surface tension>

For the inks M1 to M135 and C1 to C3 prepared above, the static surface tension at 25°C was measured using a static surface tensiometer (CBVP-Z: manufactured by Kyowa Interface Science Co., Ltd.) using the Wilhelmy method. The measured values (in mN/m) are shown in Table IV.

[Evaluation]

<Injection stability>

The inks M1 to M15 and C1 to C3 prepared above was filled into an independent drive inkjet head (360npi, ejection amount 6pL, 1024 nozzles) manufactured by Konica Minolta, Inc., and a continuous ejection test was performed for 30 minutes by a flash-synchronized droplet observation device. The injection stability was then evaluated according to the following criteria.

(Criteria)

○ (circle): During the 256 nozzles evaluated, all 256 nozzles eject successfully.
△ (triangle): During the evaluated 256 nozzles, one or more and less than five abnormal ejection nozzles are observed. × (cross mark): During the evaluated 256 nozzles, five or more abnormal ejection nozzles are observed.

<Ink storage stability>

The inks M1 to M15 and C1 to C3 prepared above were stored at 60°C for 2 weeks, and then the average particle size was measured by a particle size measuring instrument (Zetasizer Nano S-90). The ink storability was then evaluated according to the following criteria.

(Criteria)

○ (circle): Difference between average particle size after 2 weeks of storage at 60°C and average particle size prior to 2 weeks of storage at 60°C is less than 10nm.
△ (triangle): Difference between average particle size after 2 weeks of storage at 60°C and average particle size prior to 2 weeks of storage at 60°C is 10nm or more and less than 30nm.
× (cross mark): Difference between average particle size after 2 weeks of storage at 60°C and average particle size prior to 2 weeks of storage at 60°C is 30nm or more.

[Table 3]

TABLE III

| Ink No. | | M1 | M2 | M3 | M4 | M5 | M6 | M7 | M8 | M9 |
|---|---|---|---|---|---|---|---|---|---|---|
| Pigment dispersion No. [% by mass] | D1 | 20.0 | 20.0 | 20.0 | 20.0 | 20.0 | 20.0 | 20.0 | 20.0 | 20.0 |
| | D2 | – | – | – | – | – | – | – | – | – |
| | D3 | – | – | – | – | – | – | – | – | – |
| Resin particle dispersion No. [% by mass] (Solid content concentration) | P1 | 5.0 | 5.0 | – | – | – | – | 8.0 | 8.5 | 5.0 |
| | P2 | – | – | 5.0 | – | – | – | – | – | – |
| | P3 | – | – | – | 5.0 | – | – | – | – | – |
| | P4 | – | – | – | – | 5.0 | – | – | – | – |
| | P5 | – | – | – | – | – | 5.0 | – | – | – |
| Solvent [% by mass] | EG | – | 20.0 | – | – | – | – | – | – | – |
| | PG | 21.0 | 6.0 | 21.0 | 21.0 | 21.0 | 21.0 | 21.0 | 24.0 | 21.0 |
| | 1,2-PDO | – | – | – | – | – | – | – | 8.0 | – |
| | 1,2-HDO | – | – | – | – | – | – | – | – | – |
| | 2Me-1,3-PDO | – | 10.0 | – | – | – | – | – | – | – |
| | Gly | 5 | – | 5 | 5 | 5 | 5 | 5 | – | 5 |
| | DEGBE | 1.6 | 1.7 | 1.6 | 1.6 | 1.6 | 1.6 | 1.6 | 1.9 | 1.6 |
| Surfactant [% by mass] | E1010 | 1.0 | 1.0 | 1.0 | 1.0 | 1.0 | 1.0 | – | – | – |
| | KF-351A | 0.2 | 0.2 | 0.2 | 0.2 | 0.2 | 0.2 | – | – | – |
| | TEGOWET KL245 | – | – | – | – | – | – | 0.5 | – | – |
| | TEGOWET 250 | – | – | – | – | – | – | – | 1.0 | – |
| | TEGOWET 260 | – | – | – | – | – | – | – | – | 0.4 |
| | BYK3450 | – | – | – | – | – | – | – | – | – |
| | BYK3455 | – | – | – | – | – | – | – | – | – |
| | BYK348 | – | – | – | – | – | – | – | – | – |
| Antifungal agent [% by mass] | Proxel GXL(S) | 0.10 | 0.10 | 0.10 | 0.10 | 0.10 | 0.10 | 0.10 | 0.1 | 0.10 |
| Water [% by mass] | Pure water | 46.1 | 36.0 | 46.1 | 46.1 | 46.1 | 46.1 | 43.8 | 36.5 | 46.9 |

TABLE III continued

| Ink No. | | M10 | M11 | M12 | M13 | M14 | M15 | C1 | C2 | C3 |
|---|---|---|---|---|---|---|---|---|---|---|
| Pigment dispersion No. [% by mass] | D1 | 20.0 | – | 20.0 | 20.0 | 20.0 | 20.0 | – | – | – |
| | D2 | – | 20.0 | – | – | – | – | – | – | – |
| | D3 | – | – | – | – | – | – | 20.0 | 20.0 | 20.0 |
| Resin particle dispersion No. [% by mass] (Solid content concentration) | P1 | 5.0 | 5.0 | 5.0 | 5.0 | 5.0 | 5.0 | 5.0 | 8.5 | 1.0 |
| | P2 | – | – | – | – | – | – | – | – | – |
| | P3 | – | – | – | – | – | – | – | – | – |
| | P4 | – | – | – | – | – | – | – | – | – |
| | P5 | – | – | – | – | – | – | – | – | – |
| Solvent [% by mass] | EG | – | – | – | – | – | – | – | – | – |
| | PG | 21.0 | 21.0 | 21.0 | 21.0 | 21.0 | 20.0 | 21.0 | 24.0 | 6.0 |
| | 1,2-PDO | – | – | – | – | – | – | – | 8.0 | – |
| | 1,2-HDO | – | – | – | – | – | 10.0 | – | – | 3.0 |
| | 2Me-1,3-PDO | – | – | – | – | – | – | – | – | – |
| | Gly | 5 | 5 | 5 | 5 | 5 | – | 5 | – | – |
| | DEGBE | 1.6 | 1.6 | 1.6 | 1.6 | 1.6 | 5.0 | 1.6 | 1.9 | – |
| Surfactant [% by mass] | E1010 | – | 1.0 | – | – | – | – | 1.0 | – | – |
| | KF-351A | – | 0.2 | – | – | – | – | 0.2 | – | – |
| | TEGOWET KL245 | – | – | – | – | – | – | – | – | – |
| | TEGOWET 250 | – | – | – | – | – | 1.5 | – | 1.0 | – |
| | TEGOWET 260 | – | – | – | – | – | – | – | – | – |
| | BYK3450 | 0.5 | – | – | – | – | – | – | – | – |
| | BYK3455 | – | – | – | 0.5 | – | – | – | – | – |
| | BYK348 | – | – | – | – | 0.5 | – | – | – | 0.6 |
| Antifungal agent [% by mass] | Proxel GXL(S) | 0.10 | 0.10 | 0.10 | 0.10 | 0.10 | 0.10 | 0.10 | 0.1 | – |
| Water [% by mass] | Pure water | 46.8 | 46.1 | 47.3 | 46.8 | 46.8 | 38.4 | 46.1 | 36.5 | 69.4 |

[Table 4]

TABLE IV

| Ink No. | | M1 | M2 | M3 | M4 | M5 | M6 | M7 | M8 | M9 |
|---|---|---|---|---|---|---|---|---|---|---|
| Dynamic surface tension [mN/m] | Surface life 15ms | 39.4 | 41.5 | 39.0 | 41.0 | 41.2 | 40.0 | 43.8 | 35.1 | 44.7 |
| | Surface life 100ms | 36.2 | 37.9 | 35.0 | 37.0 | 38.0 | 36.5 | 38.2 | 31.0 | 40.5 |
| | Surface life 1000ms | 31.5 | 35.6 | 31.0 | 34.0 | 33.2 | 31.8 | 33.8 | 28.7 | 37.0 |
| Static surface tension [mN/m] | | 30.0 | 30.9 | 29.5 | 32.5 | 32.0 | 30.4 | 31.1 | 27.3 | 34.0 |
| Evaluation | Ejection stability | ○ | ○ | ○ | ○ | ○ | ○ | ○ | ○ | ○ |
| | Ink storability | ○ | ○ | ○ | △ | △ | △ | ○ | ○ | ○ |
| Remark | | *1 | *1 | *1 | *1 | *1 | *1 | *1 | *1 | *1 |

*1: Present Invention

TABLE IV continued

| Ink No. | | M10 | M11 | M12 | M13 | M14 | M15 | C1 | C2 | C3 |
|---|---|---|---|---|---|---|---|---|---|---|
| Dynamic surface tension [mN/m] | Surface Life 15ms | 41.7 | 40.0 | 48.5 | 46.6 | 47.3 | 32.0 | 39.0 | 35.2 | 39.4 |
| | Surface Life 100ms | 34.2 | 36.6 | 47.2 | 42.9 | 41.3 | 29.0 | 36.0 | 31.0 | 34.0 |
| | Surface Life 1000ms | 30.4 | 31.9 | 46.4 | 35.5 | 34.7 | 26.2 | 31.0 | 28.5 | 29.6 |
| Static surface tension [mN/m] | | 29.1 | 30.2 | 45.3 | 31.9 | 31.8 | 24.0 | 30.0 | 27.0 | 26.6 |
| Evaluation | Ejection stability | ○ | ○ | × | × | × | × | ○ | ○ | ○ |
| | Ink storability | ○ | ○ | ○ | ○ | ○ | × | ○ | ○ | ○ |
| Remark | | *1 | *1 | *2 | *2 | *2 | *2 | *1 | *1 | *1 |

*1: Present Invention *2: Comparative Example

As shown in the above results, the treatment liquid in the present invention in which the dynamic surface tension in the surface life of 15ms is within the range of 35 to 45mN/m is excellent in injection stability and storage stability.

[Print Test 1]

The treatment liquids and the inks prepared above were subjected to a print test in the following manner using the ink set with the combinations of Tables V to X below.

As a recording medium M, a PET film (FE2001, thickness 50μm, manufactured by Futamura Chemical Co., Ltd.) was prepared.

A scan-type printer (see FIG. 4) equipped with two independent drive inkjet heads (360npi, ejection amount 6pL or 14pL, 1024 nozzles) manufactured by Konica Minolta was prepared, the head H1 to be recorded first was filled with the respective treatment liquids, and the head H2 to be recorded later was filled with the respective inks. Then, an image of the resolution 720×720dpi was divided into two each in the scanning direction X and the conveyance direction Y to obtain four images (180×180dpi), and one-direction printing was performed in a direction in which the treatment liquid was always recorded first in a four-pass mode in which one print region was printed four times.

The conveyance rate of the carriage C was set to 300mm/sec, and a drying step was not provided between the recording of the treatment liquid and the recording of the ink. The print test was performed under the environment of 25°C and 50%RH.

In the recording of the treatment liquid, a liquid volume was set to 6pL, a maximum print rate was set to 33%, and the treatment liquid was applied imagewise in accordance with the image region of the ink. In the recording of the ink, a liquid volume was set to 14pL, and a maximum print rate was set to 100%. In the above setting, the applied amount of the treatment liquid of the solid portion is 1.7g/$m^2$, the applied amount of the ink to the solid portion is 11.9g/$m^2$, and the ratio of the applied amount of the ink and the applied amount of the treatment liquid applied to the solid portion (the applied amount of the ink/the applied amount of the treatment liquid) is 7.0 times.

[Measurement of Drying rate of Treatment liquid]

In the print test 1 above, the time from the application of the treatment liquid to the application of the ink was measured, and was calculated to be 0.2 seconds. When the drying rate of the treatment liquid was measured after 0.2 seconds from the application of the treatment liquid under the environment of 25°C and 50%RH, the drying rate was 1% or less. The drying rate of the treatment liquid was calculated by measuring the amount of change in mass of the treatment liquid.

[Drying of Recorded matter]

In the print test 1 above, after the ink was applied, a PET film was placed in a dryer set at 90°C and heated and dried for 5 minutes to obtain an image recorded matter.

FIG. 5 shows the results of measuring the dynamic surface tension in the surface life of 10ms to 1000ms of the treatment liquid and the ink in the ink set 1 at 25°C. FIG. 6 shows the results of measuring the dynamic surface tension in the surface life of 10ms to 1000ms of the treatment liquid and the ink in the ink set 44 at 25°C.

[Evaluation]

<Blurring of Outlined character>

In the methods described above, outlined characters of kanji "口, 四, 日, 回, 因, 困, 固, 国, 目, 図, 國" in the 5-point and 7-point MS Mincho font were printed, the printed character images were visually observed, and the character qualities were evaluated according to the following criteria.

(Criteria)

○ (circle) : All 5-point outlined characters are clearly recorded in detail.
△ (triangle): A 5-point missing character is only partially legible, but all 7-point outlined characters are legible.
× (cross mark): Some 7-point characters are not legible.

<Bleeding of Thin line>

Thin lines with a width of 3 pixels were recorded by the method described above, and the bleeding of the thin lines was visually evaluated according to the following criteria.

(Criteria)

○ (circle): Thin lines are printed in thin, straight lines.
△ (triangle): The thin lines are swollen in some places and are printed slightly distorted.
× (cross mark): The line is greatly blurred and thickly distorted.

<Mottling in Solid part>

The solid images of 5cm×5cm were recorded by the method described above, and the mottlings in the solid parts was visually evaluated according to the following criteria.

(Criteria)

○ (circle): Observation from a position away from 15cm shows no density unevenness in the image.
△ (triangle): Density unevenness is observed in a part of the image when observed from a position away from 15cm, but density unevenness is not observed from a position away from 30cm.
× (cross mark): Observation from a position away from 30cm shows density unevenness in the image.

<Adhesion>

The solid images of 5cm×5cm were recorded by the method described above, and the printed surface was rubbed with a fingernail to evaluate adhesion according to the following criteria.

(Criteria)

○ (circle): The printed surface does not change and not peel off even if it is rubbed with a fingernail.
△ (triangle): The printed surface is damaged and partially peels off when rubbed with a fingernail.
× (cross mark): The printed surface peels off when rubbed with a fingernail.

[Table 5]

TABLE V

| | Ink | | | Treatment liquid | | | Difference between Ink and Treatment liquid | | Printing Evaluation | | | | |
|---|---|---|---|---|---|---|---|---|---|---|---|---|---|
| Ink set No. | Ink No. | Dynamic surface tension in 15ms [mN/m] | Static surface tension [mN/m] | Treatment liquid No. | Dynamic surface tension in 15ms [mN/m] | Static surface tension [mN/m] | Dynamic surface tension in 15ms [mN/m] | Static surface tension [mN/m] | Blurring of Outlined character | Bleeding of Thinline | Mottling in Solid part | *1 | *2 |
| 1 | M1 | 39.4 | 30.0 | T1 | 28.4 | 21.4 | 11.0 | 8.6 | ○ | ○ | ○ | ○ | *3 |
| 2 | M2 | 41.5 | 30.9 | T1 | 28.4 | 21.4 | 13.1 | 9.5 | ○ | ○ | ○ | ○ | *3 |
| 3 | M3 | 39.0 | 29.5 | T1 | 28.4 | 21.4 | 10.6 | 8.1 | ○ | ○ | ○ | ○ | *3 |
| 4 | M4 | 41.0 | 32.5 | T1 | 28.4 | 21.4 | 12.6 | 11.1 | ○ | ○ | ○ | △ | *3 |
| 5 | M5 | 41.2 | 32.0 | T1 | 28.4 | 21.4 | 12.8 | 10.6 | △ | △ | △ | △ | *3 |
| 6 | M6 | 40.0 | 30.4 | T1 | 28.4 | 21.4 | 11.6 | 9.0 | △ | ○ | ○ | △ | *3 |
| 7 | M7 | 43.8 | 31.1 | T1 | 28.4 | 21.4 | 15.4 | 9.7 | ○ | ○ | ○ | ○ | *3 |
| 8 | M8 | 35.1 | 27.3 | T1 | 28.4 | 21.4 | 6.7 | 5.9 | ○ | ○ | ○ | ○ | *3 |
| 9 | M9 | 44.7 | 34.0 | T1 | 28.4 | 21.4 | 16.3 | 12.6 | ○ | ○ | ○ | ○ | *3 |
| 10 | M10 | 41.7 | 29.1 | T1 | 28.4 | 21.4 | 13.3 | 7.7 | ○ | ○ | ○ | ○ | *3 |
| 11 | M11 | 40.0 | 30.2 | T1 | 28.4 | 21.4 | 11.6 | 8.8 | △ | △ | △ | △ | *3 |
| 12 | M12 | 48.5 | 45.3 | T1 | 28.4 | 21.4 | 20.1 | 23.9 | × | × | × | × | *4 |
| 13 | M13 | 46.6 | 31.9 | T1 | 28.4 | 21.4 | 18.2 | 10.5 | △ | × | × | △ | *4 |
| 14 | M14 | 47.3 | 31.8 | T1 | 28.4 | 21.4 | 18.9 | 10.4 | △ | × | × | △ | *4 |
| 15 | M15 | 32.0 | 24.0 | T1 | 28.4 | 21.4 | 3.6 | 2.6 | × | △ | △ | △ | *4 |
| 16 | C1 | 39.0 | 30.0 | T1 | 28.4 | 21.4 | 10.6 | 8.6 | ○ | ○ | ○ | ○ | *3 |
| 17 | C2 | 35.2 | 27.0 | T1 | 28.4 | 21.4 | 6.8 | 5.6 | ○ | ○ | ○ | ○ | *3 |
| 18 | C3 | 39.4 | 26.6 | T1 | 28.4 | 21.4 | 11.0 | 5.2 | ○ | ○ | ○ | ○ | *3 |

*1: Adhesion *2: Remark *3: Present Invention *4: Comparative Example

[Table 6]

TABLE VI

| Ink Set No. | Ink | | | Treatment liquid | | | Difference between Ink and Treatment liquid | | Printing Evaluation | | | | *2 |
|---|---|---|---|---|---|---|---|---|---|---|---|---|---|
| | Ink No. | Dynamic surface tension in 15ms [mN/m] | Static surface tension [mN/m] | Treatment liquid No. | Dynamic surface tension in 15ms [mN/m] | Static surface tension [mN/m] | Dynamic surface tension in 15ms [mN/m] | Static surface tension [mN/m] | Blurring of Outlined character | Bleeding of Thinline | Mottling in Solid part | *1 | |
| 19 | M1 | 39.4 | 30.0 | T2 | 29.0 | 21.0 | 10.4 | 9.0 | ○ | ○ | ○ | ○ | *3 |
| 20 | M2 | 41.5 | 30.9 | T2 | 29.0 | 21.0 | 12.5 | 9.9 | ○ | ○ | ○ | ○ | *3 |
| 21 | M3 | 39.0 | 29.5 | T2 | 29.0 | 21.0 | 10.0 | 8.5 | ○ | ○ | ○ | ○ | *3 |
| 22 | M4 | 41.0 | 32.5 | T2 | 29.0 | 21.0 | 12.0 | 11.5 | ○ | ○ | ○ | △ | *3 |
| 23 | M5 | 41.2 | 32.0 | T2 | 29.0 | 21.0 | 12.2 | 11.0 | △ | △ | △ | △ | *3 |
| 24 | M6 | 40.0 | 30.4 | T2 | 29.0 | 21.0 | 11.0 | 9.4 | △ | ○ | ○ | △ | *3 |
| 25 | M7 | 43.8 | 31.1 | T2 | 29.0 | 21.0 | 14.8 | 10.1 | ○ | ○ | ○ | ○ | *3 |
| 26 | M8 | 35.1 | 27.3 | T2 | 29.0 | 21.0 | 6.1 | 6.3 | ○ | ○ | ○ | ○ | *3 |
| 27 | M9 | 44.7 | 34.0 | T2 | 29.0 | 21.0 | 15.7 | 13.0 | ○ | ○ | ○ | ○ | *3 |
| 28 | M10 | 41.7 | 29.1 | T2 | 29.0 | 21.0 | 12.7 | 8.1 | ○ | ○ | ○ | ○ | *3 |
| 29 | M11 | 40.0 | 30.2 | T2 | 29.0 | 21.0 | 11.0 | 9.2 | △ | △ | △ | △ | *3 |
| 30 | M12 | 48.5 | 45.3 | T2 | 29.0 | 21.0 | 19.5 | 24.3 | × | × | × | × | *4 |
| 31 | M13 | 46.6 | 31.9 | T2 | 29.0 | 21.0 | 17.6 | 10.9 | △ | × | × | △ | *4 |
| 32 | M14 | 47.3 | 31.8 | T2 | 29.0 | 21.0 | 18.3 | 10.8 | △ | × | × | △ | *4 |
| 33 | M15 | 32.0 | 24.0 | T2 | 29.0 | 21.0 | 3.0 | 3.0 | × | △ | △ | △ | *4 |
| 34 | C1 | 39.0 | 30.0 | T2 | 29.0 | 21.0 | 10.0 | 9.0 | ○ | ○ | ○ | ○ | *3 |
| 35 | C2 | 35.2 | 27.0 | T2 | 29.0 | 21.0 | 6.2 | 6.0 | ○ | ○ | ○ | ○ | *3 |
| 36 | C3 | 39.4 | 26.6 | T2 | 29.0 | 21.0 | 10.4 | 5.6 | ○ | ○ | ○ | ○ | *3 |

*1: Adhesion *2: Remark *3: Present Invention *4: Comparative Example

[Table 7]

TABLE VII

| Ink Set No. | Ink | | Treatment liquid | | | Difference between Ink and Treatment liquid | | Printing Evaluation | | | | *2 |
|---|---|---|---|---|---|---|---|---|---|---|---|---|
| | Ink No. | Dynamic surface tension in 15ms [mN/m] | Static surface tension [mN/m] | Treatment liquid No. | Dynamic surface tension in 15ms [mN/m] | Static surface tension [mN/m] | Dynamic surface tension in 15ms [mN/m] | Static surface tension [mN/m] | Blurring of Outlined character | Bleeding of Thinline | Mottling in Solid part | *1 | |
| 37 | M1 | 39.4 | 30.0 | T3 | 34.6 | 28.9 | 4.8 | 1.1 | × | △ | △ | ○ | *4 |
| 38 | M2 | 41.5 | 30.9 | T3 | 34.6 | 28.9 | 6.9 | 2.0 | × | △ | △ | ○ | *4 |
| 39 | M3 | 39.0 | 29.5 | T3 | 34.6 | 28.9 | 4.4 | 0.6 | × | × | △ | ○ | *4 |
| 40 | M4 | 41.0 | 32.5 | T3 | 34.6 | 28.9 | 6.4 | 3.6 | × | △ | △ | △ | *4 |
| 41 | M5 | 41.2 | 32.0 | T3 | 34.6 | 28.9 | 6.6 | 3.1 | × | △ | △ | △ | *4 |
| 42 | M6 | 40.0 | 30.4 | T3 | 34.6 | 28.9 | 5.4 | 1.5 | × | △ | △ | △ | *4 |
| 43 | M7 | 43.8 | 31.1 | T3 | 34.6 | 28.9 | 9.2 | 2.2 | × | △ | △ | ○ | *4 |
| 44 | M8 | 35.1 | 27.3 | T3 | 34.6 | 28.9 | 0.5 | −1.6 | × | × | △ | ○ | *4 |
| 45 | M9 | 44.7 | 34.0 | T3 | 34.6 | 28.9 | 10.1 | 5.1 | △ | ○ | △ | ○ | *3 |
| 46 | M10 | 41.7 | 29.1 | T3 | 34.6 | 28.9 | 7.1 | 0.2 | × | × | △ | ○ | *4 |
| 47 | M11 | 40.0 | 30.2 | T3 | 34.6 | 28.9 | 5.4 | 1.3 | × | △ | △ | △ | *4 |
| 48 | M12 | 48.5 | 45.3 | T3 | 34.6 | 28.9 | 13.9 | 16.4 | × | × | × | × | *4 |
| 49 | M13 | 46.6 | 31.9 | T3 | 34.6 | 28.9 | 12.0 | 3.0 | × | × | × | △ | *4 |
| 50 | M14 | 47.3 | 31.8 | T3 | 34.6 | 28.9 | 12.7 | 2.9 | × | × | × | △ | *4 |
| 51 | M15 | 32.0 | 24.0 | T3 | 34.6 | 28.9 | −2.6 | −4.9 | × | × | × | △ | *4 |
| 52 | C1 | 39.0 | 30.0 | T3 | 34.6 | 28.9 | 4.4 | 1.1 | × | △ | △ | ○ | *4 |
| 53 | C2 | 35.2 | 27.0 | T3 | 34.6 | 28.9 | 0.6 | −1.9 | × | △ | △ | ○ | *4 |
| 54 | C3 | 39.4 | 26.6 | T3 | 34.6 | 28.9 | 4.8 | −2.3 | × | △ | △ | ○ | *4 |

*1: Adhesion *2: Remark *3: Present Invention *4: Comparative Example

[Table 8]

TABLE VIII

| Ink Set No. | Ink | | | Treatment liquid | | | Difference between Ink and Treatment liquid | | Printing Evaluation | | | | *2 |
|---|---|---|---|---|---|---|---|---|---|---|---|---|---|
| | Ink No. | Dynamic surface tension in 15ms [mN/m] | Static surface tension [mN/m] | Treatment liquid No. | Dynamic surface tension in 15ms [mN/m] | Static surface tension [mN/m] | Dynamic surface tension in 15ms [mN/m] | Static surface tension [mN/m] | Blurring of Outlined character | Bleeding of Thinline | Mottling in Solid part | *1 | |
| 55 | M1 | 39.4 | 30.0 | T4 | 30.5 | 22.1 | 8.9 | 7.9 | △ | ○ | ○ | ○ | *3 |
| 56 | M2 | 41.5 | 30.9 | T4 | 30.5 | 22.1 | 11.0 | 8.8 | △ | ○ | ○ | ○ | *3 |
| 57 | M3 | 39.0 | 29.5 | T4 | 30.5 | 22.1 | 8.5 | 7.4 | △ | ○ | ○ | ○ | *3 |
| 58 | M4 | 41.0 | 32.5 | T4 | 30.5 | 22.1 | 10.5 | 10.4 | △ | ○ | ○ | △ | *3 |
| 59 | M5 | 41.2 | 32.0 | T4 | 30.5 | 22.1 | 10.7 | 9.9 | △ | △ | △ | △ | *3 |
| 60 | M6 | 40.0 | 30.4 | T4 | 30.5 | 22.1 | 9.5 | 8.3 | △ | ○ | ○ | △ | *3 |
| 61 | M7 | 43.8 | 31.1 | T4 | 30.5 | 22.1 | 13.3 | 9.0 | △ | ○ | ○ | ○ | *3 |
| 62 | M8 | 35.1 | 27.3 | T4 | 30.5 | 22.1 | 4.6 | 5.2 | × | △ | ○ | ○ | *4 |
| 63 | M9 | 44.7 | 34.0 | T4 | 30.5 | 22.1 | 14.2 | 11.9 | △ | ○ | ○ | ○ | *3 |
| 64 | M10 | 41.7 | 29.1 | T4 | 30.5 | 22.1 | 11.2 | 7.0 | △ | ○ | ○ | ○ | *3 |
| 65 | M11 | 40.0 | 30.2 | T4 | 30.5 | 22.1 | 9.5 | 8.1 | △ | △ | △ | △ | *3 |
| 66 | M12 | 48.5 | 45.3 | T4 | 30.5 | 22.1 | 18.0 | 23.2 | × | × | × | × | *4 |
| 67 | M13 | 46.6 | 31.9 | T4 | 30.5 | 22.1 | 16.1 | 9.8 | △ | × | × | △ | *4 |
| 68 | M14 | 47.3 | 31.8 | T4 | 30.5 | 22.1 | 16.8 | 9.7 | △ | × | × | △ | *4 |
| 69 | M15 | 32.0 | 24.0 | T4 | 30.5 | 22.1 | 1.5 | 1.9 | × | △ | △ | △ | *4 |
| 70 | C1 | 39.0 | 30.0 | T4 | 30.5 | 22.1 | 8.5 | 7.9 | △ | ○ | ○ | ○ | *3 |
| 71 | C2 | 35.2 | 27.0 | T4 | 30.5 | 22.1 | 4.7 | 4.9 | × | × | △ | ○ | *4 |
| 72 | C3 | 39.4 | 26.6 | T4 | 30.5 | 22.1 | 8.9 | 4.5 | △ | × | △ | ○ | *4 |

*1: Adhesion *2: Remark *3: Present Invention *4: Comparative Example

[Table 9]

TABLE IX

| Ink Set No. | Ink | | | Treatment liquid | | | Difference between Ink and Treatment liquid | | Printing Evaluation | | | | |
|---|---|---|---|---|---|---|---|---|---|---|---|---|---|
| | Ink No. | Dynamic surface tension in 15ms [mN/m] | Static surface tension [mN/m] | Treatment liquid No. | Dynamic surface tension in 15ms [mN/m] | Static surface tension [mN/m] | Dynamic surface tension in 15ms [mN/m] | Static surface tension [mN/m] | Blurring of Outlined character | Bleeding of Thinline | Mottling in Solid part | *1 | *2 |
| 73 | M1 | 39.4 | 30.0 | T5 | 36.5 | 22.1 | 2.9 | 7.9 | × | × | △ | ○ | *3 |
| 74 | M2 | 41.5 | 30.9 | T5 | 36.5 | 22.1 | 5.0 | 8.8 | × | △ | △ | ○ | *3 |
| 75 | M3 | 39.0 | 29.5 | T5 | 36.5 | 22.1 | 2.5 | 7.4 | × | × | △ | ○ | *3 |
| 76 | M4 | 41.0 | 32.5 | T5 | 36.5 | 22.1 | 4.5 | 10.4 | × | × | △ | △ | *3 |
| 77 | M5 | 41.2 | 32.0 | T5 | 36.5 | 22.1 | 4.7 | 9.9 | × | × | △ | △ | *3 |
| 78 | M6 | 40.0 | 30.4 | T5 | 36.5 | 22.1 | 3.5 | 8.3 | × | × | △ | △ | *3 |
| 79 | M7 | 43.8 | 31.1 | T5 | 36.5 | 22.1 | 7.3 | 9.0 | × | △ | △ | ○ | *3 |
| 80 | M8 | 35.1 | 27.3 | T5 | 36.5 | 22.1 | -1.4 | 5.2 | △ | × | △ | ○ | *3 |
| 81 | M9 | 44.7 | 34.0 | T5 | 36.5 | 22.1 | 8.2 | 11.9 | × | △ | △ | ○ | *3 |
| 82 | M10 | 41.7 | 29.1 | T5 | 36.5 | 22.1 | 5.2 | 7.0 | × | △ | △ | ○ | *3 |
| 83 | M11 | 40.0 | 30.2 | T5 | 36.5 | 22.1 | 3.5 | 8.1 | × | × | △ | △ | *3 |
| 84 | M12 | 48.5 | 45.3 | T5 | 36.5 | 22.1 | 12.0 | 23.2 | × | △ | × | × | *3 |
| 85 | M13 | 46.6 | 31.9 | T5 | 36.5 | 22.1 | 10.1 | 9.8 | × | △ | × | △ | *3 |
| 86 | M14 | 47.3 | 31.8 | T5 | 36.5 | 22.1 | 10.8 | 9.7 | × | △ | × | △ | *3 |
| 87 | M15 | 32.0 | 24.0 | T5 | 36.5 | 22.1 | -4.5 | 1.9 | △ | × | △ | △ | *3 |
| 88 | C1 | 39.0 | 30.0 | T5 | 36.5 | 22.1 | 2.5 | 7.9 | × | × | △ | ○ | *3 |
| 89 | C2 | 35.2 | 27.0 | T5 | 36.5 | 22.1 | -1.3 | 4.9 | × | × | △ | ○ | *3 |
| 90 | C3 | 39.4 | 26.6 | T5 | 36.5 | 22.1 | 2.9 | 4.5 | × | × | △ | ○ | *3 |

*1: Adhesion *2: Remark *3: Comparative Example

[Table 10]

TABLE X

| Ink Set No. | Ink | | | Treatment liquid | | | Difference between Ink and Treatment liquid | | Printing Evaluation | | | | *2 |
|---|---|---|---|---|---|---|---|---|---|---|---|---|---|
| | Ink No. | Dynamic surface tension in 15ms [mN/m] | Static surface tension [mN/m] | Treatment liquid No. | Dynamic surface tension in 15ms [mN/m] | Static surface tension [mN/m] | Dynamic Surface Tension in 15ms [mN/m] | Static Surface Tension [mN/m] | Blurring of Outlined character | Bleeding of Thin line | Mottling in Solid part | *1 | |
| 91 | M1 | 39.4 | 30.0 | T6 | 24.2 | 20.1 | 15.2 | 9.9 | △ | × | △ | △ | *3 |
| 92 | M2 | 41.5 | 30.9 | T6 | 24.2 | 20.1 | 17.3 | 10.8 | △ | × | △ | △ | *3 |
| 93 | M3 | 39.0 | 29.5 | T6 | 24.2 | 20.1 | 14.8 | 9.4 | △ | × | △ | △ | *3 |
| 94 | M4 | 41.0 | 32.5 | T6 | 24.2 | 20.1 | 16.8 | 12.4 | △ | × | △ | × | *3 |
| 95 | M5 | 41.2 | 32.0 | T6 | 24.2 | 20.1 | 17.0 | 11.9 | △ | × | △ | × | *3 |
| 96 | M6 | 40.0 | 30.4 | T6 | 24.2 | 20.1 | 15.8 | 10.3 | △ | × | △ | × | *3 |
| 97 | M7 | 43.8 | 31.1 | T6 | 24.2 | 20.1 | 19.6 | 11.0 | × | × | △ | △ | *3 |
| 98 | M8 | 35.1 | 27.3 | T6 | 24.2 | 20.1 | 10.9 | 7.2 | △ | × | △ | △ | *3 |
| 99 | M9 | 44.7 | 34.0 | T6 | 24.2 | 20.1 | 20.5 | 13.9 | × | × | △ | △ | *3 |
| 100 | M10 | 41.7 | 29.1 | T6 | 24.2 | 20.1 | 17.5 | 9.0 | △ | × | △ | △ | *3 |
| 101 | M11 | 40.0 | 30.2 | T6 | 24.2 | 20.1 | 15.8 | 10.1 | × | × | △ | × | *3 |
| 102 | M12 | 48.5 | 45.3 | T6 | 24.2 | 20.1 | 24.3 | 25.2 | × | × | × | × | *3 |
| 103 | M13 | 46.6 | 31.9 | T6 | 24.2 | 20.1 | 22.4 | 11.8 | × | × | × | × | *3 |
| 104 | M14 | 47.3 | 31.8 | T6 | 24.2 | 20.1 | 23.1 | 11.7 | × | × | × | × | *3 |
| 195 | M15 | 32.0 | 24.0 | T6 | 24.2 | 20.1 | 7.8 | 3.9 | × | × | △ | △ | *3 |
| 196 | C1 | 39.0 | 30.0 | T6 | 24.2 | 20.1 | 14.8 | 9.9 | × | × | △ | △ | *3 |
| 107 | C2 | 35.2 | 27.0 | T6 | 24.2 | 20.1 | 11.0 | 6.9 | × | × | △ | △ | *3 |
| 108 | C3 | 39.4 | 26.6 | T6 | 24.2 | 20.1 | 15.2 | 6.5 | × | × | △ | △ | *3 |

*1: Adhesion *2: Remark *3: Comparative Example

As shown in the above results, the ink set of the present invention suppresses image defects and is excellent in adhesion to a base material as compared with the ink set of the comparative examples.

[Print Test 2]

Two independent drive heads of piezo-type inkjet head (360dpi, ejection amount 6pL) manufactured by Konica Minolta, Inc. were arranged so that the nozzles were alternately arranged, and a head module of 720dpi×720dpi was prepared, and installed in the single-pass printer illustrated in FIG. 1 so that nozzle rows were perpendicular to the conveyance direction.

The inkjet head of the head module installed in the treatment liquid applying part was filled with the treatment liquid T1 obtained as described above, and inkjet head of the head module installed in the ink applying part was filled with the ink M1 obtained as described above. In this way, the inkjet recording apparatus of a single-pass system capable of recording the ink set 1 described in Table V was constructed.

Using the above inkjet recording apparatus, the same images as in the print test 1 were recorded under the recording conditions described in Table XI, and evaluated using the same index as in the print test 1. As a recording medium M, a PET film (FE2001, thickness 50μm, manufactured by Futamura Chemical Co., Ltd.) was prepared. The conveyance speed at the time of recording was set to 300mm/sec.

The time from the application of the treatment liquid to the application of the ink was adjusted by moving the recording medium to the ink applying part after waiting for a predetermined time after passing the treatment liquid applying part.

The drying rate of the treatment liquid was calculated by measuring the mass change rate of the treatment liquid applied to the PET film to obtain the amount of the solvent volatilized from the time when the treatment liquid was applied until the time when the ink was applied. The applied amount of the treatment liquid and the applied amount of the ink were adjusted by changing the droplet size and the the printing ratio, respectively. Evaluation results are shown in Table XI.

In Table XI, "≦ 1" represents "1% or less".

[Table 11]

TABLE XI

| Experiment No. | Ink set No. | Time from application of Treatment liquid to application of Ink [sec] | Drying rate of Treatment liquid [%] | Applied amount of treatment liquid in Solid part [g/m$^2$] | Applied amount of Ink in Solid part [g/m$^2$] | Applied amount of Ink/ Applied amount of Treatment liquid in Solid part |
|---|---|---|---|---|---|---|
| 2-1 | 1 | 1 | ≤1 | 1.7 | 11.9 | 7.0 |
| 2-2 | 1 | 8 | 10 | 1.7 | 11.9 | 7.0 |
| 2-3 | 1 | 15 | 20 | 1.7 | 11.9 | 7.0 |
| 2-4 | 1 | 30 | 40 | 1.7 | 11.9 | 7.0 |
| 2-5 | 1 | 1 | ≤1 | 5.1 | 11.9 | 2.3 |
| 2-6 | 1 | 1 | ≤1 | 11.9 | 11.9 | 1.0 |
| 2-7 | 1 | 1 | ≤1 | 1.7 | 47.7 | 28.1 |

TABLE XI continued

| Experiment No. | Printing Evaluation | | | | Remark |
|---|---|---|---|---|---|
| | Blurring of Outlined character | Bleeding of Thin line | Mottling in Solid part | Adhesion | |
| 2-1 | ○ | ○ | ○ | ○ | Present Invention |
| 2-2 | ○ | ○ | ○ | ○ | Present Invention |
| 2-3 | △ | ○ | ○ | ○ | Present Invention |
| 2-4 | △ | △ | △ | ○ | Present Invention |
| 2-5 | ○ | ○ | ○ | ○ | Present Invention |
| 2-6 | ○ | ○ | △ | ○ | Present Invention |
| 2-7 | △ | △ | △ | △ | Present Invention |

Industrial applicability

The present invention can be applied to an ink set and an inkjet recording method which suppress image defects and has excellent adhesion to a base material.

Description of Reference Numerals

1 recording apparatus
10 treatment liquid applying part

11 inkjet head
12 treatment liquid droplet
20 ink applying part
21 inkjet head
22 ink droplet
23 second dryer
30 feeding roller
40 winding roller
C treatment liquid layer
F base material
P image recorded matter
R ink layer
50 packaging materials for canned foods
51 tinplate base material
52 thermosetting resin layer (base coat)
53 treatment liquid layer
54 ink layer
55 thermosetting resin layer (top coat)
C carriage
H1 head
H2 head
X scanning direction
Y conveyance direction
M recording medium (base material)

## Claims

1. An ink set comprising an ink and a treatment liquid, wherein

    the ink contains a pigment, resin fine particles, a water-soluble solvent having a boiling point within a range of 150 to 250°C, and a surfactant,
    the treatment liquid contains a polyvalent metal salt, a water-soluble solvent having a boiling point within a range of 150 to 250°C, and a surfactant,
    a static surface tension of the ink at 25°C is 5mN/m or higher than that of the treatment liquid at 25°C,
    a dynamic surface tension in a surface life of 15ms of the ink at 25°C is 5mN/m or higher than that of the treatment liquid in a surface life of 15ms at 25°C,
    a dynamic surface tension in the surface life of 15ms of the ink is in the range of 35 to 45mN/m, and
    a dynamic surface tension in the surface life of 15ms of the treatment liquid is in the range of 25 to 35mN/m.

2. The ink set according to claim 1, wherein the pigment is dispersed in an anionic polymer dispersant.

3. The ink set according to claim 1 or 2, wherein the ink contains the range of 3 to 15% by mass of the resin fine particles having an aggregation property of 0.2 or less with 0.15% by mass of a calcium acetate monohydrate aqueous solution.

4. The ink set according to any one of claims 1 to 3, wherein the resin fine particles contain a water dispersible polyester resin having a sulfonic acid group.

5. The ink set according to any one of claims 1 to 4, wherein the following equation (I) is satisfied:

$$\text{Equation (I): } (B-A) \leqq 5\text{mN/m}$$

    in the case that a dynamic surface tension in the surface life of 15ms of the treatment liquid in an undried state at 25 °C is defined as A, and when the treatment liquid is dried and the drying ratio thereof is 30%, a dynamic surface tension in the surface life of 15ms of the treatment liquid is defined as B.

6. The ink set according to any one of claims 1 to 5, wherein a surfactant that is not contained in the ink is contained in the

treatment liquid.

**7.** An inkjet recording method for recording an image using the ink set according to any one of claims 1 to 6, comprising:

applying the treatment liquid to a base material, and then
applying the ink to a region to which the treatment liquid was applied while the treatment liquid is wet without undergoing a heat-drying step.

**8.** The inkjet recording method according to claim 7, further comprising: applying the ink to the region to which the treatment liquid was applied, in a state where the drying rate of the treatment liquid is 30% or less.

**9.** The inkjet recording method according to claim 7 or 8, comprising: applying the ink to the region to which the treatment liquid was applied within 10 seconds after the treatment liquid was applied to the base material.

**10.** The recording method according to any one of claims 7 to 9, wherein an applied amount of the ink per unit area is in the range of 2 to 25 times an applied amount of the treatment liquid.

## Patentansprüche

**1.** Ein Tintensatz, der eine Tinte und eine Behandlungsflüssigkeit umfasst, wobei

die Tinte ein Pigment, feine Harzteilchen, ein wasserlösliches Lösungsmittel mit einem Siedepunkt im Bereich von 150 bis 250 °C und ein Tensid enthält,
die Behandlungsflüssigkeit ein mehrwertiges Metallsalz, ein wasserlösliches Lösungsmittel mit einem Siedepunkt im Bereich von 150 bis 250°C und ein Tensid enthält,
die statische Oberflächenspannung der Tinte bei 25 °C 5 N/m oder mehr beträgt als die der Behandlungsflüssigkeit bei 25 °C,
die dynamische Oberflächenspannung der Tinte bei einer Oberflächenlebensdauer von 15 ms bei 25 °C 5 N/m oder mehr beträgt als die der Behandlungsflüssigkeit bei einer Oberflächenlebensdauer von 15 ms bei 25 °C,
eine dynamische Oberflächenspannung der Tinte während der Lebensdauer von 15 ms im Bereich von 35 bis 45 mN/m liegt und
eine dynamische Oberflächenspannung der Behandlungsflüssigkeit während der Lebensdauer von 15 ms im Bereich von 25 bis 35 mN/m liegt.

**2.** Tintensatz nach Anspruch 1, wobei das Pigment in einem anionischen Polymerdispersionsmittel dispergiert ist.

**3.** Tintensatz nach Anspruch 1 oder 2, wobei die Tinte im Bereich von 3 bis 15 Gew.-% feine Harzteilchen mit einer Aggregationseigenschaft von 0,2 oder weniger mit 0,15 Gew.-% einer wässrigen Calciumacetat-Monohydratlösung enthält.

**4.** Tintensatz nach einem der Ansprüche 1 bis 3, wobei die feinen Harzteilchen ein wasserdispergierbares Polyesterharz mit einer Sulfonsäuregruppe enthalten.

**5.** Tintensatz nach einem der Ansprüche 1 bis 4, wobei die folgende Gleichung (I) erfüllt ist:

$$\text{Gleichung (I): } (B\text{-}A) \leqq 5\text{mN/m}$$

für den Fall, dass die dynamische Oberflächenspannung der Behandlungsflüssigkeit im ungetrockneten Zustand bei 25 °C während 15 ms als A definiert ist, und wenn die Behandlungsflüssigkeit getrocknet wird und ihr Trocknungsverhältnis 30 % beträgt, die dynamische Oberflächenspannung der Behandlungsflüssigkeit während 15 ms als B definiert ist.

**6.** Tintensatz nach einem der Ansprüche 1 bis 5, wobei in der Behandlungsflüssigkeit ein Tensid enthalten ist, das nicht in der Tinte enthalten ist.

**7.** Tintenstrahlaufzeichnungsverfahren zur Aufzeichnung eines Bildes unter Verwendung des Tintensatzes nach einem

der Ansprüche 1 bis 6, umfassend:

Auftragen der Behandlungsflüssigkeit auf ein Grundmaterial und anschließend
Auftragen der Tinte auf einen Bereich, auf den die Behandlungsflüssigkeit aufgetragen wurde, während die Behandlungsflüssigkeit nass ist, ohne einen Wärmetrocknungsschritt zu durchlaufen.

8. Tintenstrahlaufzeichnungsverfahren nach Anspruch 7, ferner umfassend: Auftragen der Tinte auf den Bereich, auf den die Behandlungsflüssigkeit aufgetragen wurde, in einem Zustand, in dem die Trocknungsrate der Behandlungsflüssigkeit 30 % oder weniger beträgt.

9. Tintenstrahlaufzeichnungsverfahren nach Anspruch 7 oder 8, umfassend: Auftragen der Tinte auf den Bereich, auf den die Behandlungsflüssigkeit aufgetragen wurde, innerhalb von 10 Sekunden, nachdem die Behandlungsflüssigkeit auf das Basismaterial aufgetragen wurde.

10. Aufzeichnungsverfahren nach einem der Ansprüche 7 bis 9, wobei die aufgetragene Menge der Tinte pro Flächeneinheit im Bereich des 2- bis 25-fachen der aufgetragenen Menge der Behandlungsflüssigkeit liegt.

**Revendications**

1. Ensemble d'encre comprenant une encre et un liquide de traitement, dans lequel

l'encre contient un pigment, des fines particules de résine, un solvant soluble dans l'eau avec un point d'ébullition dans une plage de 150 à 250 °C, et un agent tensioactif,
le liquide de traitement contient un sel métallique polyvalent, un solvant soluble dans l'eau avec un point d'ébullition dans une plage de 150 à 250 °C, et un agent tensioactif,
une tension superficielle statique de l'encre à 25 °C est de 5 mN/m ou plus élevée que celle du liquide de traitement à 25 °C,
une tension superficielle dynamique de l'encre dans une vie superficielle de 15 ms à 25 °C est de 5 mN/m ou plus élevée que celle du liquide de traitement dans une vie superficielle de 15 ms à 25 °C,
une tension superficielle dynamique dans une vie superficielle de 15 ms de l'encre est dans une plage de 35 à 45 mN/m, et
une tension superficielle dynamique dans une vie superficielle de 15 ms du liquide de traitement est dans une plage de 25 à 35 mN/m.

2. L'ensemble d'encre selon la revendication 1, dans lequel le pigment est dispersé dans un dispersant polymère anionique.

3. L'ensemble d'encre selon la revendication 1 ou 2, dans lequel l'encre contient la plage de 3 à 15 % en masse des fines particules de résine ayant une propriété d'agrégation de 0,2 ou moins avec 0,15 % en masse d'une solution aqueuse d'acétate de calcium monohydraté.

4. L'ensemble d'encre selon l'une quelconque des revendications 1 à 3, dans laquelle les fines particules de résine contiennent une résine polyester dispersable dans l'eau ayant un groupe d'acide sulfonique.

5. L'ensemble d'encre selon l'une quelconque des revendications 1 à 4, dans lequel l'équation (I) suivante est satisfaite:

$$\text{Équation (I)} : (B - A) \leq 5 \text{ mN/m}$$

dans le cas où une tension superficielle dynamique dans la vie superficielle de 15 ms du liquide de traitement dans un état non séché à 25°C est définie comme A, et lorsque le liquide de traitement est séché et que le taux de séchage est de 30 %, une tension superficielle dynamique dans la vie superficielle de 15 ms du liquide de traitement est définie comme B.

6. L'ensemble d'encre selon l'une quelconque des revendications 1 à 5, dans lequel un agent tensioactif non contenu dans l'encre est contenu dans le liquide de traitement.

**7.** Procédé d'enregistrement à jet d'encre pour enregistrer une image utilisant l'ensemble d'encre selon l'une quelconque des revendications 1 à 6, comprenant :

appliquer le liquide de traitement à un matériau de base, et puis
appliquer l'encre à une région à laquelle le liquide de traitement a été appliqué alors que le liquide de traitement est humide sans subir d'une étape de séchage à chaud.

**8.** Le procédé d'enregistrement à jet d'encre selon la revendication 7, comprenant en outre : appliquer l'encre à la région à laquelle le liquide de traitement a été appliqué, dans un état où le taux de séchage du liquide de traitement est de 30 % ou moins.

**9.** Le procédé d'enregistrement à jet d'encre selon la revendication 7 ou 8, comprenant : appliquer l'encre à la région à laquelle le liquide de traitement a été appliqué dans les 10 secondes après que le liquide de traitement a été appliqué au matériau de base.

**10.** Le procédé d'enregistrement selon l'une quelconque des revendications 7 à 9, dans lequel une quantité d'encre appliquée par unité de zone est dans la plage de 2 à 25 fois une quantité de liquide de traitement appliquée.

FIG.1

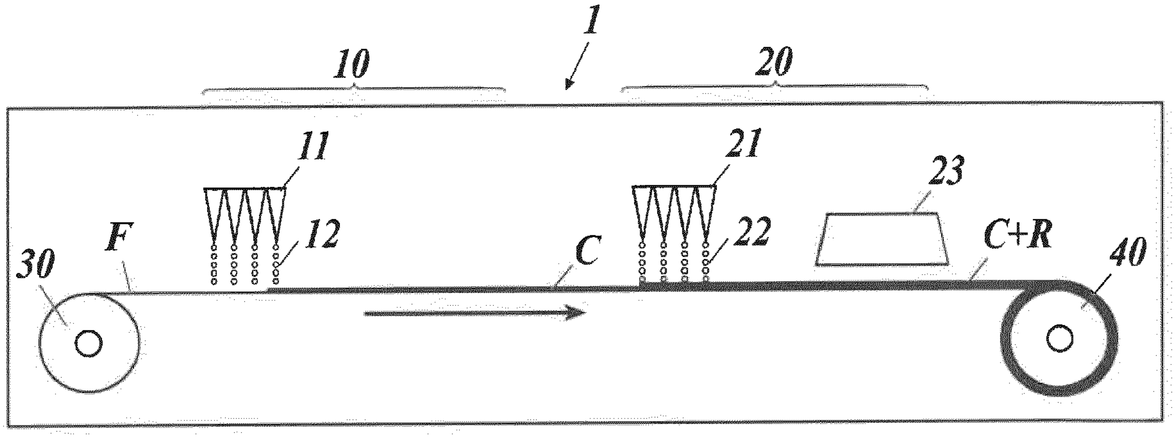


FIG.2

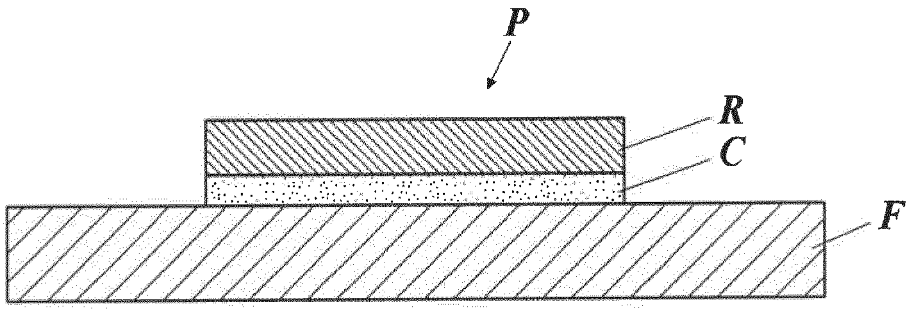


FIG.3

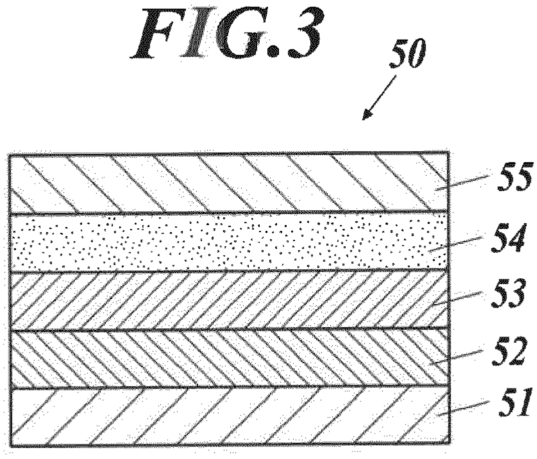

FIG.4

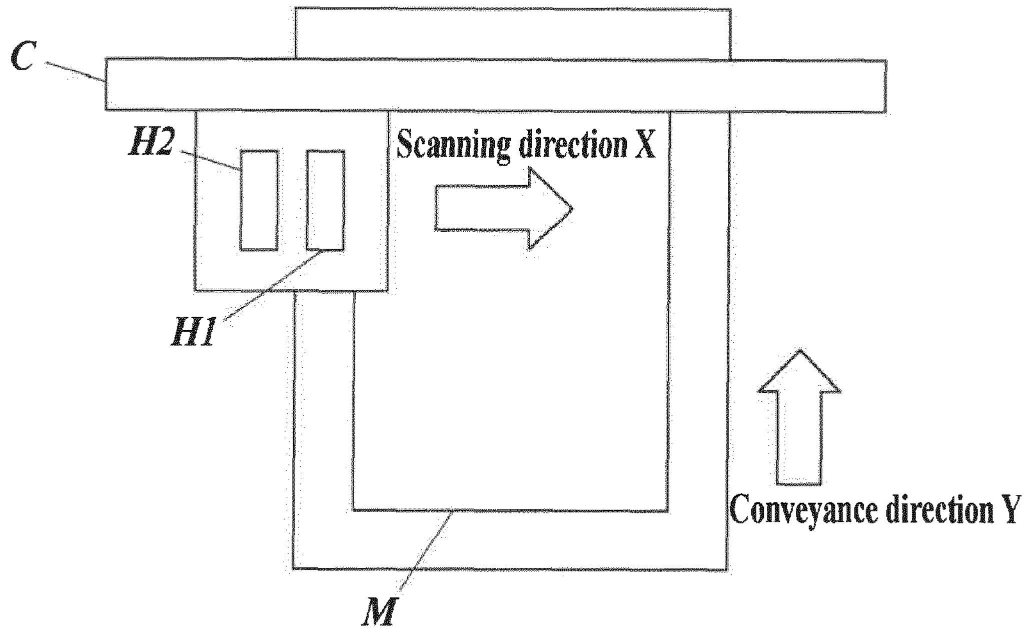

FIG.5

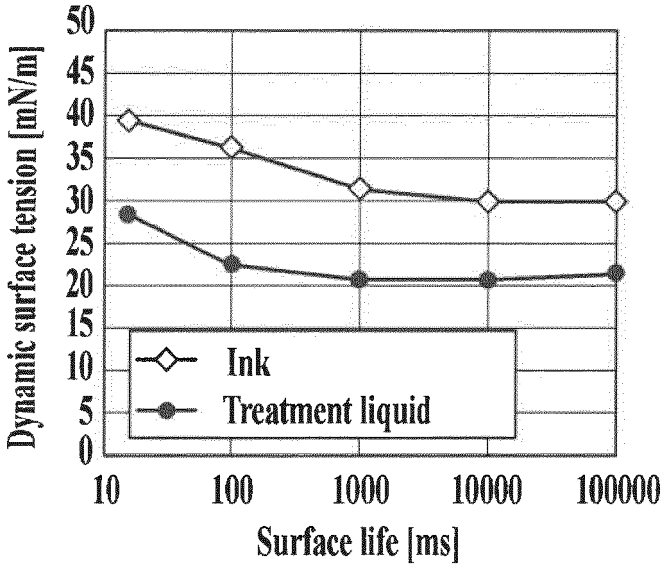
Dynamic surface tension [mN/m]
50
45
40
35
30
25
20
15
10
5
0
10
100
1000
10000
100000
Surface life [ms]
Ink
Treatment liquid

FIG.6

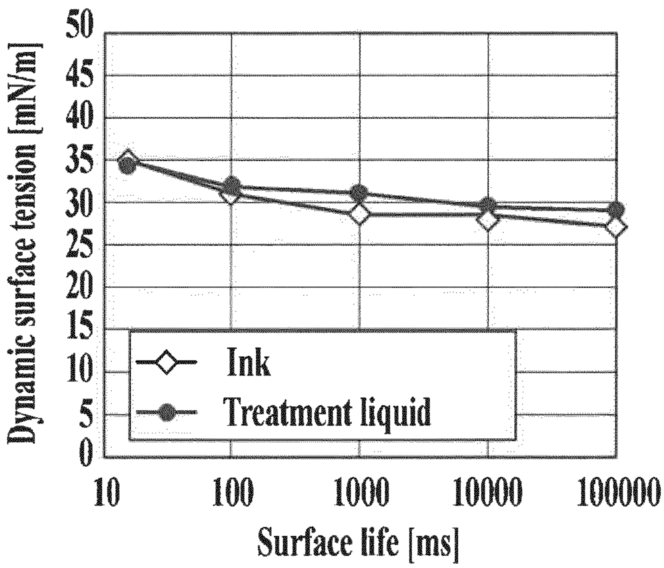
Dynamic surface tension [mN/m]
50
45
40
35
30
25
20
15
10
5
0
10
100
1000
10000
100000
Surface life [ms]
Ink
Treatment liquid

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018122589 A
- JP 2016221943 A
- JP S5774193 A
- JP S5787988 A
- JP S62261476 A
- JP S5774192 A
- JP S5787989 A
- JP S6072785 A
- JP S61146591 A
- JP H0195091 A
- JP H0313376 A
- JP S5942993 A
- JP S5952689 A
- JP S62280069 A
- JP S61242871 A
- JP H04219266 A
- US 2681294 A
- JP 2015074161 A
- JP 2017 A
- JP 177578 A